# FASCICULE DE BREVET EUROPEEN

(11) **EP 2 926 617 B1**
(45) Date de publication et mention de la délivrance du brevet: **01.01.2020**
(21) Numéro de dépôt: 13812008.4
(22) Date de dépôt: 29.11.2013
(51) Int. Cl.: H04W 76/14, H04W 4/08, H04W 76/40, H04W 4/06

(54) **COMMUNICATION EN MODE DIRECT DANS UN SYSTÈME DE RADIOCOMMUNICATION LARGE BANDE**
DIREKTMODUSKOMMUNIKATION IN EINEM BREITBANDIGEN FUNKKOMMUNIKATIONSSYSTEM
DIRECT MODE COMMUNICATION IN A WIDEBAND RADIO COMMUNICATION SYSTEM

(30) Priorité: 03.12.2012 FR 1203275
(43) Date de publication de la demande: 07.10.2015
(73) Titulaire: Airbus DS SAS, 78990 Elancourt (FR)
(72) Inventeur: MARQUE-PUCHEU, Gérard, F-78480 Verneuil (FR); GRUET, Christophe, F-78180 Montigny le Bretonneux (FR)
(74) Mandataire: Cabinet Camus Lebkiri
(86) Numéro de dépôt international: PCT/FR2013/000315
(87) Numéro de publication internationale: WO 2014/087057

(56) Documents cités:
- WO-A1-2010/049801
- WO-A1-2011/109941
- WO-A1-2012/088470
- US-A1- 2005 254 449
- US-A1- 2006 165 035

## Description

### Domaine de l'invention

La présente invention concerne d'une manière générale le domaine de la radiocommunication en mode direct. Plus particulièrement, l'invention concerne l'établissement d'une communication en mode direct dans un système de radiocommunication large bande. L'invention trouve des applications notamment dans les systèmes de radiocommunication professionnelle PMR ("Professional Mobile Radio" en anglais) lors d'interventions de professionnels de la sécurité tels que les sapeurs pompiers, la police ou encore les forces militaires dans des zones hors de la couverture radio.

### Etat de la technique et problèmes techniques rencontrés

De façon générale, une communication en mode direct est une communication entre des dispositifs de radiocommunications, tels que des terminaux mobiles, sans faire usage d'une infrastructure radio. La portée est néanmoins limitée à quelques centaines de mètres voir quelques kilomètres.

Dans les systèmes de radiocommunications à bande étroite, par exemple de technologie TETRA ou TETRAPOLE, des ressources radio sont réservées pour la communication en mode direct entre des terminaux mobiles. Les autres ressources radio sont utilisées pour les communications relayées, c'est-à-dire les communications entre terminaux mobiles transitant par l'infrastructure réseau.

Les systèmes de radiocommunication à ressources partagées PMR se différencient des systèmes publics de téléphonie mobile tels que le GSM ou l'UMTS surtout par la rapidité d'établissement de la communication, les appels de groupe, les appels prioritaires, le cryptage de bout en bout et la possibilité de relier directement deux stations mobiles sans passer par une station de base (mode direct).

Aujourd'hui les réseaux de radiocommunication large bande évoluent rapidement et s'imposent dans le monde de la radiocommunication privée. Contrairement aux systèmes de radiocommunication à bande étroite, les systèmes de radiocommunication large bande ont une gestion des
ressources qui sont partagées par toutes les cellules du système. C'est pourquoi, il est difficile de réserver des ressources large bande pour des communications en mode direct. Il existe alors, dans un objectif de proposer les mêmes fonctions de communication PMR que les systèmes à bande étroite, un besoin de mettre en œuvre des communications en mode direct dans un système de radiocommunication large bande.

Le document WO 2011/109941 intitulé « Method and apparatus for device-to-device communication setup » est connu de l'état de la technique.

### Exposé de l'invention

Un objectif de l'invention est de palier les inconvénients de l'art antérieur en proposant un procédé d'établissement d'une communication en mode direct dans un système de radiocommunication large bande selon les revendications 1 à 13, un dispositif station de base selon la revendication 14 et un dispositif terminal selon la revendication 15.

L'invention a donc pour objet un procédé d'établissement d'une communication en mode direct pour des terminaux d'un groupe de communication en mode direct donné dans au moins une cellule courante d'un système de radiocommunication large bande comportant une pluralité de cellules, chaque cellule du système comprenant une station de base. Le procédé comprend les étapes suivantes :
- une transmission d'une requête d'établissement d'un canal de communication en mode direct vers la station de base courante de la cellule courante par un terminal du groupe enregistré auprès de ladite station de base, la requête comprenant une identité du groupe et des paramètres de qualité de service spécifiques à la communication en mode direct demandée,
- après réception de la requête par la station de base courante, un établissement d'un canal de communication en mode direct en allouant des blocs de ressources libres sélectionnés parmi un ensemble de blocs de ressources alloués à la cellule courante, en fonction des paramètres de qualité de service,
- une détermination d'une valeur d'avance de temps par la station de base courante en fonction d'au moins une donnée temporelle,
- une transmission d'un message d'établissement du canal, transmis par la station de base courante aux terminaux enregistrés auprès de ladite station de base courante, le message comprenant l'identité du groupe et des paramètres d'établissement du canal établi et la valeur d'avance de temps déterminée, et
- après réception du message d'établissement par les terminaux du groupe enregistrés auprès de la station de base courante, un accès de chacun desdits terminaux au canal de communication en mode direct à partir des paramètres d'établissement transmis pour communiquer directement avec lesdits autres terminaux du groupe et une synchronisation des terminaux entre eux en fonction de la valeur d'avance de temps.

Le procédé permet d'établir une communication en mode direct entre des terminaux d'un même groupe de communication enregistrés auprès de la station de base courante dans un système de communication large bande. Dans ce procédé, c'est la station de base qui alloue les blocs de ressources pour établir un canal permettant l'accès de communication en mode direct. Une fois le canal établi, la station de base n'intervient plus dans la communication directe. Les terminaux communiquent directement entre eux via le canal sans passer par l'infrastructure réseaux. La station de base peut observer les échanges dans le canal DMO, permettant ainsi par exemple la gestion de la facturation et la vérification d'une utilisation légitime du canal alloué.

La valeur d'avance de temps déterminée permet aux terminaux du groupe enregistrés auprès de la station de base de communiquer directement entre eux en mode direct sans créer de conflit de communication avec d'autres communications établis dans la cellule courante.

Selon une autre caractéristique, le procédé comprend après l'établissement du canal de communication en mode direct dans la cellule courante, une transmission d'une requête d'établissement d'une extension de canal du canal de communication en mode direct à au moins une station de base voisine d'une cellule voisine. L'établissement d'une extension de canal permet à des terminaux du groupe enregistrés ou allant s'enregistrer auprès d'une cellule voisine de la cellule courante d'accéder à la communication en mode direct en cours dans la cellule courante.

L'invention a aussi pour objet une station de base d'une cellule d'un système de radiocommunication large bande, le système comportant une pluralité de cellules chacune comportant une station de base, et au moins un terminal d'un groupe de communication en mode direct donné étant enregistré auprès de la station de base, la station de base comprenant :
- un moyen pour recevoir une requête d'établissement d'un canal de communication en mode direct transmise par le terminal auprès de la station de base, la requête comprenant une identité du groupe et les paramètres de qualité de service spécifiques à la communication en mode direct demandée,
- un moyen pour établir un canal de communication en mode direct en allouant des blocs de ressources libres sélectionnés parmi un ensemble de blocs de ressources alloués à la cellule, en fonction des paramètres de qualité de service,
- un moyen pour déterminer une valeur d'avance de temps en fonction d'au moins une donnée temporelle,
- un moyen pour transmettre un message d'établissement du canal vers les terminaux enregistrés auprès de ladite station de base, le message comprenant l'identité du groupe et des paramètres d'établissement du canal formé et la valeur d'avance de temps déterminée, le message étant transmis afin que chaque terminal du groupe enregistrés auprès de la station de base accède au canal de communication en mode direct à partir des paramètres d'établissement pour communiquer directement avec lesdits autres terminaux du groupe et afin que les terminaux se synchronisent entre eux en fonction de la valeur de temps,
les moyens de la station de base mettant en oeuvre des étapes du procédé d'établissement d'une communication en mode direct selon l'une des revendications de procédé.

L'invention a aussi pour objet un terminal appartenant à un groupe de communication en mode direct donné et enregistré auprès d'une station de base d'une cellule d'un système de radiocommunication large bande, le système comportant une pluralité de cellules chacun comportant une station de base, le terminal comprenant:
- un moyen pour transmettre une requête d'établissement d'un canal de communication en mode direct à la station de base, la requête comprenant une identité du groupe et des paramètres de qualité de service spécifiques à la communication en mode direct demandée, la requête étant transmise afin que la station de base établisse un canal de communication en mode direct en allouant des blocs de ressources libres sélectionnés parmi un ensemble de blocs de ressources alloués à la cellule courante, en fonction des paramètres de qualité de service et afin que la station de base détermine une valeur d'avance de temps en fonction d'au moins une donnée temporelle,
- un moyen pour recevoir un message d'établissement du canal provenant de la station de base, le message comprenant l'identité du groupe et des paramètres d'établissement du canal établi et la valeur d'avance de temps déterminée par la station de base, et
- un moyen pour accéder au canal de communication en mode direct à partir des paramètres d'établissement transmis afin de communiquer directement avec lesdits autres terminaux du groupe et pour synchroniser le terminal aux autres terminaux du groupe en fonction de la valeur d'avance de temps;
les moyens du terminal mettant en œuvre des étapes du procédé d'établissement d'une communication en mode direct selon l'une des revendications de procédé.

### Brève description des figures

L'invention sera mieux comprise à la lecture de la description qui suit et à l'examen des figures qui l'accompagnent. Celles-ci ne sont présentées qu'à titre illustratif mais nullement limitatif de l'invention. Les figures montrent :
- la figure 1 : une représentation schématique d'un système de radiocommunication selon l'invention,
- la figure 2 : un schéma bloc représentatif d'une station de base du système de radiocommunication selon l'invention,
- la figure 3 : un schéma bloc représentatif d'un terminal utilisateur du système de radiocommunication selon l'invention,
- la figure 4 : un diagramme fonctionnel d'un procédé d'établissement assisté d'une communication en mode direct dans une cellule du système de radiocommunication selon l'invention,
- la figure 5 : un diagramme fonctionnel de l'établissement d'une extension de la communication en mode direct dans une cellule voisine,
- la figure 6 : un diagramme fonctionnel représentant une première réalisation de l'établissement d'une extension de la communication en mode direct dans une cellule voisine lors du déplacement d'un terminal d'une première cellule vers la cellule voisine, et
- la figure 7 : un diagramme fonctionnel représentant une deuxième réalisation de l'établissement d'une extension de la communication en mode direct dans une cellule voisine lors du déplacement d'un terminal d'une première cellule vers la cellule voisine.

### Description de l'invention

On note dès à présent que les figures ne sont pas à l'échelle.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisations peuvent également être combinées pour fournir d'autres réalisations.

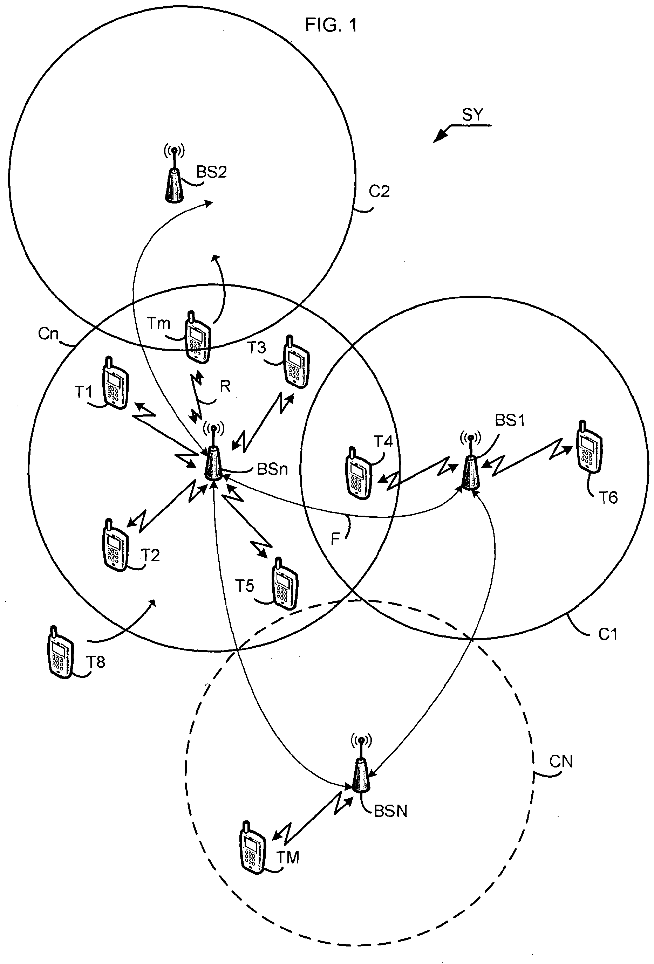

La **figure 1** représente un système de radiocommunication SY selon l'invention. Le système de radiocommunication de l'invention est un réseau de radiocommunication large bande, par exemple du type WIMAX ("Worldwide Interoperability for Microwave Access" en anglais) fondé sur une interface Air selon la norme IEEE 802.16, plus particulièrement selon la norme 802.16m, ou de type LTE ("Long Term Evolution" en anglais) qui dispose de bandes larges de fréquences chacune typiquement supérieure à un Méga-Hertz, par exemples de 1,4 MHz, 3 MHz, 5 MHz, 10 MHz ou 20 MHz.

Le système de radiocommunication SY comprend des cellules C1 à CN comportant chacune une station de base BSn et des terminaux Tm rattachés à la station de base, avec les indices n et m compris entre 1 ≤n ≤N et 1 ≤m ≤M, N et M étant des entiers. On entend par terminal Tm rattaché à la station de base, un terminal qui s'est enregistré auprès de la station de base pour émettre vers et recevoir depuis la station de base des communications.

Une station de base BSn d'une cellule Cn est apte à communiquer avec un terminal Tm de la cellule Cn par l'intermédiaire d'un canal radio R du réseau de radiocommunication large bande. Une station de base est également apte à communiquer avec d'autres stations de base du système SY par l'intermédiaire d'un canal filaire F, par exemple de type X2 en technologie LTE. En technologie LTE, la station de base est appelée eNodeB.

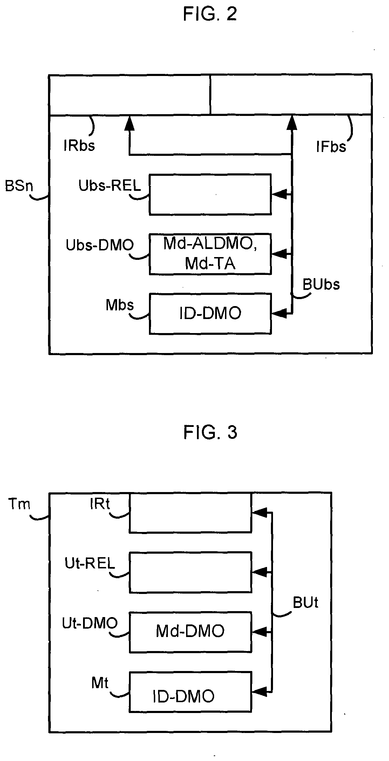

La figure 2 représente, plus en détail, une station de base BSn selon l'invention. La station de base comprend une interface de radiocommunication IRbs, une interface de communication filaire IFbs, une unité de traitement en mode relayé Ubs-REL, une unité de traitement en mode direct Ubs-DMO et un ensemble de mémoires Mbs. Les entités IRbs, IFbs, Ubs-REL, Ubs-DMO et Mbs sont reliées entre elles par un bus bidirectionnel BUbs.

L'unité de traitement en mode relayé Ubs-REL comporte par exemple un ou plusieurs processeurs commandant l'établissement et la gestion d'une communication en mode relayé selon un procédé connu. Une description plus en avant de cette unité est inutile.

L'unité de traitement en mode direct Ubs-DMO comporte par exemple un ou plusieurs processeurs commandant un module Md-ALDMO d'allocation de ressource pour une communication en mode direct, un module Md-TA de détermination d'une avance de temps.

L'interface de radiocommunication IRbs transmet et reçoit des messages, notifications depuis/vers les terminaux de la cellule par l'intermédiaire de canaux de communication radio.

L'interface filaire de communication IFbs transmet et reçoit des messages, notifications depuis/vers les stations de base voisines du système de radiocommunication.

L'ensemble de mémoires Mbs est un support d'enregistrement dans lequel peuvent être sauvegardés des programmes. Il comprend des mémoires volatiles et/ou non volatiles telles que des mémoires EEPROM, ROM, PROM, RAM, DRAM, SRAM, etc. L'algorithme mettant en œuvre les étapes du procédé d'établissement d'une communication en mode direct exécutées dans la station de base est mémorisé dans Mbs.

En référence à la figure 1, un terminal Tm peut-être par exemple un téléphone (Smartphone), une tablette, une clés-modem USB ou tout autre type d'équipement fixe ou mobile (GPS, ordinateur, écran vidéo, ...). Un terminal Tm est apte à communiquer avec une station de base BSn à laquelle il est rattaché à travers le réseau de radiocommunication large bande. Un terminal est apte à communiquer en mode relayé avec d'autres terminaux de la cellule ou d'autres terminaux d'autres cellules du système SY. On entend par communication en mode relayé un échange de données depuis un terminal émetteur vers un autre terminal récepteur ou un groupe de terminaux récepteurs par l'intermédiaire de l'infrastructure du réseau de radiocommunication. Les communications entre terminaux passent par les stations de base de l'infrastructure du réseau auxquelles sont rattachés les terminaux. Selon l'invention, un terminal Tm d'une cellule est également apte à communiquer en mode direct avec d'autres terminaux de la cellule ou de cellules adjacentes, appelées également cellules voisines. On entend par communication en mode direct un échange de données depuis un terminal émetteur vers un autre terminal récepteur ou un groupe de terminaux récepteurs sans passer par l'infrastructure du réseau de radiocommunication, donc sans passer par la station de base.

La figure 3 représente plus en détail, un terminal Tm selon l'invention. Le terminal comprend une interface de radiocommunication IRt, une unité de traitement Ut-REL d'une communication en mode relayé, une unité de traitement Ut-DMO d'une communication en mode direct et un ensemble de mémoires Mt. Les entités IRt, Ut-REL, Ut-DMO et Mt sont reliées entre elles par un bus bidirectionnel BUt.

L'unité de traitement Ut-REL comporte par exemple un ou plusieurs processeurs contrôlant la gestion des communications en mode relayé. Une description plus en avant de cette unité est inutile.

L'unité de traitement Ut-DMO comporte par exemple un ou plusieurs processeurs commandant un module Md-DMO de gestion des communications en mode direct.

L'interface de radiocommunication IRt permet de transmettre et de recevoir des messages, notifications depuis/vers la station de base et/ou des terminaux de la même cellule.

L'ensemble de mémoires Mt est un support d'enregistrement dans lequel peuvent être sauvegardés des programmes. Il comprend des mémoires volatiles et/ou non volatiles telles que des mémoires EEPROM, ROM, PROM, RAM, DRAM, SRAM, etc. L'algorithme mettant en œuvre les étapes du procédé d'établissement d'une communication en mode direct exécutées dans un terminal Tm est mémorisé dans Mt.

Les terminaux d'une même cellule communiquent avec la station de base de la cellule par l'intermédiaire de canaux de communications radio. En technologie large bande, un canal de communication est formé d'un ou plusieurs blocs de ressources. On entend par bloc de ressources, un bloc fréquentiel constitué de plusieurs sous-porteuses fréquentielles pendant une fenêtre temporelle, appelée pas temporel. La fenêtre temporelle est constituée de plusieurs temps symboles au sens de la modulation OFDM. La bande de fréquence du réseau de radiocommunication large bande est divisée en plusieurs blocs fréquentiels partagés entre les cellules du système SY selon un procédé d'allocation de ressources connu, telle qu'une réutilisation fréquentielle selon un facteur spécifique par exemple un facteur 1, ou telle qu'une réutilisation de fréquence fractionnaire. A chaque cellule est alloué un ou plusieurs blocs fréquentiels chacun comportant un bloc de ressources par pas temporel.

En mode relayé, les canaux de communication alloués à une cellule sont divisés en deux types de canaux de communications : les canaux de communication montant et les canaux de communication descendant. Un canal de communication montant permet une communication depuis un terminal de la cellule vers la station de la base. Un canal de communication descendant permet une communication depuis la station de base vers un terminal ou un groupe de terminaux de la cellule.

Les canaux de communications montant ou descendant, chacun formé par un ou plusieurs blocs de ressources, comprennent des canaux de contrôle et des canaux de transport. Les canaux de contrôle comprennent des données de contrôle qui sont par exemple des données de synchronisation entre un terminal et la station de base, des données d'information système, des données d'allocation de ressources. Les canaux de contrôle en communication descendante sont accessibles par tous les terminaux de la cellule. Les canaux de contrôle en communication montante sont accessibles par la station de base. Les canaux de transport permettent le transport des données de signalisation telles que l'identité du destinataire, la modulation de la communication, et le transport des données de trafic, telles que les données voix, les données multimédia. Des canaux de transports en communication montante ou descendante sont sélectionnés et alloués par la station de base en fonction des demandes de communications envoyées par des terminaux émetteurs. Les données de trafic des canaux de transport ne sont accessibles qu'à un ou plusieurs terminaux spécifiques formant par exemple un groupe de communication.

Pour établir une communication en mode relayé entre des terminaux de la cellule, l'unité Ubs-REL de la station de base alloue, selon une mise en œuvre connue, un canal de transport montant associé à un canal de transport descendant. Une description plus en avant de l'établissement connu d'une communication en mode relayé est inutile.

Pour communiquer en mode direct, un groupe de terminaux d'une même cellule utilisent un canal de transport, appelé canal DMO, sélectionné par la station de base parmi l'ensemble des canaux de transport montant ou descendant. Puis, les terminaux échangent directement entre eux par l'intermédiaire de ce canal DMO sans passer par la station de base.

Pour établir le canal DMO ou le modifier, la station de base et les terminaux de la cellule échangent des informations par l'intermédiaire d'un canal de contrôle montant et d'un canal de contrôle descendant dédiés au mode direct. Ces canaux sont appelés respectivement dans la suite de la description canal de contrôle DMO montant et canal de contrôle DMO descendant. Le canal de contrôle DMO montant correspond, par exemple en technologie LTE, à des messages de type RRC ("Radio Ressource Control" en anglais) véhiculés via un canal physique montant P-USCH ("Physical Uplink Shared CHannel" en anglais).

Le canal descendant DMO correspond, par exemple en technologie LTE, à un type de message SIB ("Système Information Block" en anglais) dédié au DMO parmi un ensemble de types de message SIB relatifs à des informations systèmes. Les messages SIB dédiés au DMO sont véhiculés via un canal physique descendant PDSCH ("Physical Downlink Shared CHannel" en anglais).

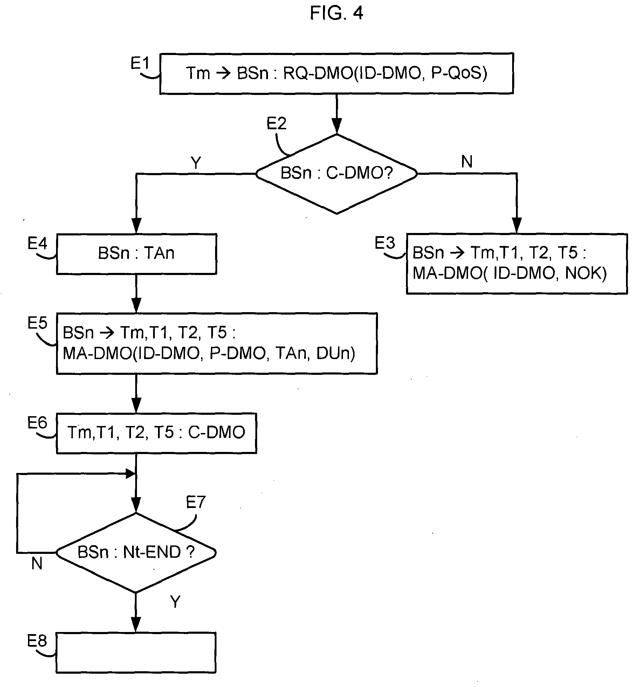

Le diagramme fonctionnel illustré à la figure 4 représente les étapes du procédé d'établissement d'un canal DMO dans une des cellules du système. Plus particulièrement, le procédé est décrit à partir d'un exemple d'établissement d'une communication en mode direct dans une cellule Cn demandé par le terminal Tm pour le groupe de communication en mode direct Tm, T1, T2, T4, T5 et T8. On appellera dans la suite de la description groupe DMO un groupe de communication en mode direct. Initialement, les terminaux Tm, T1, T2 et T5 de la cellule Cn sont enregistrés auprès de la station de base BSn. Le terminal T8 n'est pas encore dans la cellule Cn. Le terminal T4 de la cellule C1 est enregistré auprès de la station de base BS1. On entend par terminal enregistré auprès d'une station de base, un terminal qui peut transmettre des données de contrôle à la station de base via des canaux de contrôle montants et la station de base qui peut transmettre à tous les terminaux enregistrés auprès d'elle des données de contrôle via des canaux de contrôle descendants.

Les étapes E1 à E7 décrivent l'établissement du canal DMO dans la cellule Cn pour les terminaux Tm, T1, T2 et T5 du groupe DMO.

A l'étape E1, l'utilisateur du terminal Tm souhaite initier une communication en mode direct DMO avec le groupe DMO constitué des terminaux Tm, T1, T2, T4, T5 et T8. En variante, le terminal Tm est désigné parmi l'ensemble des terminaux du groupe DMO pour demander l'établissement de la communication DMO. Pour initier la communication DMO, le module Md-DMO du terminal Tm forme une requête RQ-DMO d'établissement d'un canal DMO. L'interface IRt du terminal Tm transmet à la station de base BSn la requête RQ-DMO par l'intermédiaire du canal de contrôle DMO montant. La requête RQ-DMO comprend une identité ID-DMO du groupe DMO, des paramètres P-QoS de qualité de service QoS spécifiques à la communication requise.

L'identité ID-DMO est mémorisée dans une mémoire Mbs de chaque station de base du système de radiocommunication SY. L'identité ID-DMO est également mémorisée dans une mémoire Mt dans chaque terminal Tm, T1, T2, T4, T5 et T8 du groupe DMO. L'identité ID-DMO est associée dans la mémoire de la station de base à des identificateurs des terminaux Tm, T1, T2, T4, T5 et T8 du groupe DMO. Un identificateur de terminal est par exemple, L'identité IMSI ("International Mobile Subscriber Identity" en anglais) relative à l'usager du terminal ou l'identité IMEI ("International Mobile Equipement Identity" en anglais) du terminal. Une mémoire de la station de base peut comprendre plusieurs identités de groupe DMO correspondant à plusieurs groupes DMO différents. De même une mémoire de chaque terminal peut comprendre plusieurs identités de groupe DMO correspondant à plusieurs groupes DMO différents dans lequel le terminal est membre. En variante, l'identité ID-DMO est préalablement associée à des identificateurs des terminaux du groupe DMO dans une base de données du réseau par exemple une base de données HSS en technologie LTE. Dans cette variante, après réception de la requête d'allocation RQ-DMO, la station de base mémorise l'identité ID-DMO dans une des mémoires Mbs et demande à la base de données du réseau de lui transmettre les identificateurs des terminaux du groupe DMO associés à l'identité ID-DMO pour les associer ensuite à l'identité ID-DMO mémorisée.

Les paramètres P-QoS de qualité de service QoS indiquent le type de données qui vont être transmises dans le canal DMO (données voix ou données multimédia), la modulation requise dans le canal, le débit de transmission des données et la durée d'allocation du canal requise..

Puis à l'étape E2, l'interface IRbs de la station de base BSn reçoit la requête RQ-DMO. Le module Md-ALDMO de la station de base sélectionne parmi les blocs de ressources libres alloués à la cellule ceux correspondants aux paramètres P-QoS de qualité de service requis pour établir le canal C-DMO. On entend par blocs de ressources libres des blocs non utilisés pour des communications relayées en cours dans la cellule Cn ou pour des communications en mode direct en cours dans la cellule Cn.

Durant cette étape, le module Md-ALDMO peut détecter une surcharge radio de la cellule, c'est-à-dire qu'une grande partie des blocs de ressources sont utilisés aussi bien pour d'autres communications en mode relayé qu'en mode direct. De cette détection, le module Md-ALDMO ne peut établir qu'un canal DMO sous-dimensionné ne correspondant pas exactement aux paramètres de qualité de service demandés par le terminal qui a émit la requête RQ-DMO. L'allocation d'un canal DMO sous-dimensionné par la station de base pour un groupe de terminaux a pour avantage de permettre au moins une transmission minimale de la communication, par exemple une transmission de données phoniques, en particulier lors d'interventions urgentes d'un groupe de professionnels de la sécurité sur un site.

Si à l'étape E2, aucun bloc de ressource n'est libre ou que le nombre de blocs de ressource n'est pas suffisant pour établir un canal DMO même sous-dimensionné (N), le module Md-ALDMO ne peut établir le canal C-DMO. Puis à l'étape E3, l'interface IRbs de la station BSn transmet via le canal de contrôle DMO descendant aux terminaux de la cellule Cn et en particulier aux terminaux du groupe Tm, T1, T2 et T5 un message MA-DMO d'établissement du canal contenant l'identité du groupe ID-DMO et une information NOK indiquant que le canal C-DMO ne peut pas être établi. En variante, pour notifier que le canal C-DMO n'a pas pu être établi, la station de base transmet des paramètres P-DMO d'établissement d'un canal DMO de valeur nulle.

Si à l'étape E2, la station de base a alloué suffisamment de blocs de ressource pour former le canal C-DMO de taille normale ou sous-dimensionné (Y), le module Md-TA de la station de base BSn détermine une valeur d'avance de temps TAn ("Timing advance" en anglais) à l'étape E4. La valeur TAn est déterminée en fonction de données temporelles provenant d'un ou des terminaux du groupe DMO rattachés à la station de base BSn. La valeur d'avance de temps correspond au temps de parcours d'un signal depuis un terminal vers la station de base. Des réalisations de détermination de la valeur d'avance de temps sont décrites ultérieurement dans la description. La valeur d'avance de temps TAn est mémorisée dans une des mémoires de la station de base. La valeur d'avance de temps TAn sera envoyée à tous les terminaux Tm, T1, T2, T5 du groupe identifié ID-DMO enregistrés dans la cellule Cn afin d'améliorer leur transmission directe et d'éviter toute collision avec des canaux de transport alloués à d'autres communications. En effet les blocs de ressources formant des canaux de transport alloués à d'autres communications dans la cellule Cn peuvent être adjacents aux blocs de ressources formant le canal C-DMO alloué au groupe DMO.

Puis à l'étape E5, l'unité Ubs-DMO de la station de base BSn établit un message MA-DMO d'établissement du canal C-DMO. L'interface IRbs diffuse à tous les terminaux Tm, T1, T2, T5 du groupe DMO présents dans la cellule Cn le message MA-DMO par l'intermédiaire du canal de contrôle DMO descendant. Le message MA-DMO comprend des paramètres P-DMO du canal C-DMO. Les paramètres P-DMO peuvent être le ou les blocs fréquentiels et les pas temporels définissant les blocs de ressources formant le canal DMO, ainsi que la modulation du canal DMO. Le message MA-DMO comprend également l'identité du groupe ID-DMO et la valeur TAn d'avance de temps déterminée. Le message MA-DMO peut comprendre également une durée DUn d'utilisation du canal C-DMO par le groupe. La durée DUn est déterminée par la station de base BSn et représente par exemple le temps disponible des blocs de ressources formant le canal C-DMO avant d'être utilisés pour d'autres communications.

Puis à l'étape E6, chaque interface IRt d'un terminal Tm, T1, T2, T5 du groupe DMO reçoit le message MA-DMO. Lorsqu'un canal C-DMO a été établi, le module Md-DMO de chaque terminal applique les paramètres P-DMO afin d'accéder audit canal et de communiquer directement avec les autres terminaux du groupe. Le module Md-DMO de chaque terminal applique également la valeur d'avance de temps TAn pour que chaque terminal puisse se synchroniser aux blocs de ressources alloués au canal C-DMO sans créer de conflit avec des blocs adjacents dédiés à d'autres communications. Lors de la communication en mode direct, les échanges entre les terminaux du groupe sont des échanges directs classiques. La station de base n'intervient normalement pas dans ces échanges. Nous ne développerons pas d'avantage les échanges directs classiques entre les terminaux du groupe DMO.

Si les paramètres P-DMO définissent un canal DMO sous-dimensionné, chaque terminal peut s'adapter à l'allocation est transmettre des données moins importantes en termes de ressources. En variante, si les paramètres P-DMO définissent un canal DMO sous-dimensionné, chaque terminal peut refuser d'accéder à la communication en mode direct.

Si le message MA-DMO notifie qu'un canal DMO n'a pas pu être établi selon l'étape E3, les terminaux ne se synchronisent pas et ne peuvent communiquer directement.

Si le message MA-DMO comprend des paramètres P-DMO d'un canal DMO sous-dimensionné comparativement aux paramètres de qualité de service P-QoS transmise, chaque terminal peut décider ne de pas accéder à la communication en mode direct via le canal C-DMO sous-dimensionné et peut le notifier à la station de base.

Le message MA-DMO, comportant des paramètres P-DMO valables ou de valeur nulle, peut être diffusé par l'interface IRbs de la station de base pendant toute la durée de la communication DMO afin que d'autres terminaux du groupe DMO qui vont s'enregistrer auprès de la station de base BSn puissent communiquer en mode direct avec le groupe DMO en cours. Par exemple, le terminal T8 illustré sur la figure 1 appartenant au groupe DMO arrive dans la cellule Cn et s'enregistre auprès de la station de base BSn. Après enregistrement, le terminal T8 reçoit le message d'allocation MA-DMO via le canal de contrôle DMO descendant et accède à la communication DMO en cours dans le canal C-DMO.

En cours de communication DMO, un des terminaux du groupe et appartenant à la cellule Cn peut transmettre une requête RQ-DMO à la station de base BSn, comme à l'étape E1 pour demander une modification du canal C-DMO, par exemple pour augmenter ou diminuer le nombre de ressources radio. La requête comprend l'identité ID-DMO et des paramètres P-QoS de qualité de service correspondant à la modification demandée du canal DMO. A la réception de la requête par la station de base, les étapes E2 et suivantes du procédé sont réitérées.

Puis à l'étape E7, la communication DMO peut continuer tant qu'aucune notification Nt-END de fin de communication du groupe n'est transmise à la station de base BSn (N). Une telle notification Nt-END peut être transmise par le terminal initiateur de la communication de groupe via le canal de contrôle DMO montant. La notification peut également être transmise par un autre terminal du groupe DMO élu responsable pour notifier la fin de la communication DMO à la station de base BSn par l'intermédiaire du canal de contrôle DMO montant. La notification Nt-END reçue par la station de base BSn comprend l'identité ID-DMO du groupe DMO dont la communication est finie.

En variante, la notification Nt-END peut également être générée par la station de base BSn elle-même à la fin d'écoulement de la durée DUn d'utilisation du canal DMO. Dans ce cas, la station de base peut transmettre la notification Nt-END aux terminaux du groupe rattachés à la cellule Cn. La notification Nt-END peut également être générée dans chaque terminal du groupe rattaché à la station de base à la fin d'écoulement de la durée DUn, lorsque la durée a été transmises auxdits terminaux.

Selon une autre variante, la notification Nt-END peut également être générée par la station de base dès que tous les terminaux du groupe DMO ne sont plus enregistrés auprès de la station de base BSn.

Dès que la notification Nt-END est reçue ou générée par la station de base BSn (Y), la station de base libère à l'étape E8, les blocs de ressources alloués au canal C-DMO pour d'autres communications relayées ou en mode direct dans la cellule Cn.

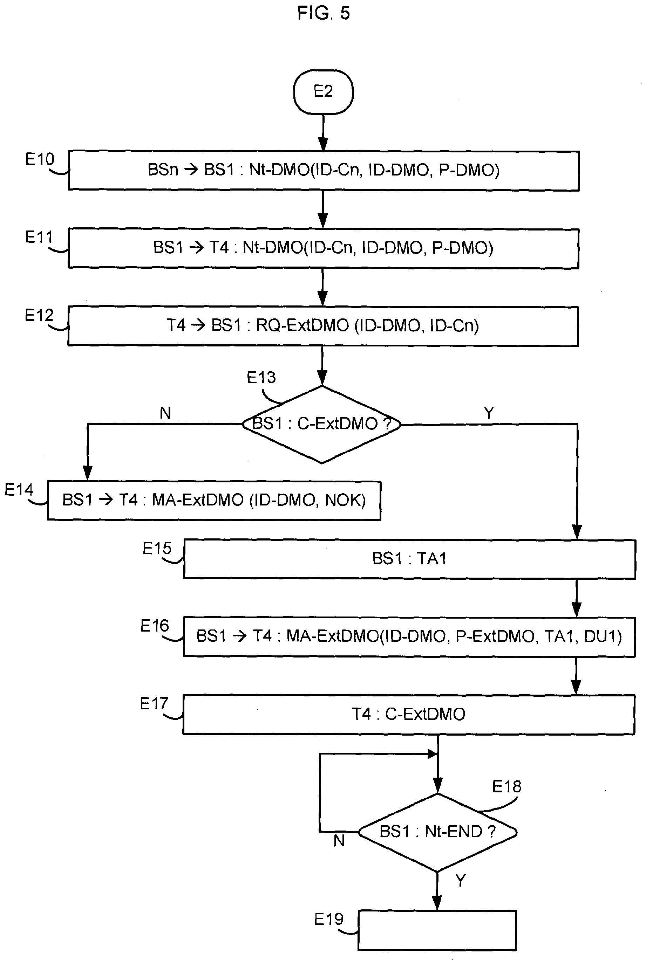

Le diagramme fonctionnel illustré à la figure 5 représente l'établissement d'une extension de canal C-ExtDMO du canal C-DMO dans une cellule voisine lorsqu'un des terminaux du groupe est inscrit dans la cellule voisine et que la communication de groupe n'est pas encore établie. On appellera dans la suite de la description cellule courante la cellule Cn qui a établi le canal C-DMO. L'extension de canal C-ExtDMO établie dans une cellule voisine doit comprendre les mêmes blocs de ressources que le canal C-DMO établi dans la cellule courante afin que les terminaux du groupe enregistrés dans les deux cellules puissent communiquer directement entre eux.

Les étapes E10 à E19 de la figure 5 décrivent l'établissement d'une extension de canal C-ExtDMO du canal C-DMO dans la cellule voisine C1 afin que le terminal T4 du groupe DMO puisse communiquer directement avec les terminaux du groupe Tm, T1, T2, et T5 enregistrés dans la cellule courante Cn. Le diagramme fonctionnel de la figure 5 commence à l'étape E2 du diagramme fonctionnel de la figure 4.

Dès que le module Md-ALDMO de la station BSn a établi le canal C-DMO à l'étape E2, l'interface IFbs de la station courante BSn transmet une notification Nt-DMO d'établissement d'un canal C-DMO à l'étape E10. La notification Nt-DMO est transmise aux stations de base des cellules voisines, telle que la station de base BS1 de la cellule C1 et la station de base BS2 de la cellule C2 représentées à la figure1. La notification Nt-DMO comprend l'identité ID-DMO du groupe, les paramètres P-DMO du canal C-DMO. La notification peut comprendre également la valeur TAn d'avance de temps et la durée DUn déterminée par la station de base. La notification peut également comprendre une identité ID-Cn de la cellule Cn dans laquelle la communication DMO a été initiée.

Lors de toutes modifications du canal C-DMO requise par un des terminaux Tm, T1, T2 ou T5, la station de base courante BSn peut transmettre aux stations de base voisines une notification Nt-DMO comprenant les nouveaux paramètres P-DMO du canal C-DMO.

A l'étape E11, l'interface IFbs de la station de base voisine BS1 reçoit la notification Nt-DMO et l'interface IRbs de la station de base la diffuse aux différents terminaux qui sont rattachés à la cellule C1. La diffusion de la notification Nt-DMO est véhiculée dans le canal de contrôle DMO descendant de la cellule C1. Seuls les terminaux appartenant au groupe ID-DMO peuvent accéder à la notification Nt-DMO.

A l'étape E12, l'interface IRt de chaque terminal membre du groupe DMO et rattachés à la cellule C1, dans l'exemple le terminal T4, reçoit la notification Nt-DMO. Pour accéder à la communication DMO, un des terminaux, dans l'exemple le terminal T4, transmet une requête RQ-ExtDMO d'établissement d'une extension de canal à la station de la base BS1. La requête RQ-ExtDMO est transmise via le canal de contrôle DMO montant de la cellule C1. La requête RQ-ExtDMO comporte l'identité du groupe ID-DMO et peut comprendre également l'identité ID-Cn de la cellule Cn dans laquelle la communication DMO a été initiée. Lorsque plusieurs terminaux membres du groupe sont rattachés à la cellule C1, un des terminaux peut être désigné pour demander l'établissement d'une extension de canal du canal DMO. En variante, c'est la première requête RQ-ExtDMO reçue par la station de base BS1 qui est traitée par la station BS1.

A l'étape E13, le module d'allocation Md-ALDMO de la station de base BS1 vérifie s'il peut allouer les mêmes blocs de ressources que ceux alloués dans la cellule Cn afin de former l'extension de canal C-ExtDMO du canal C-DMO. Pour cela le module Md-ALDMO de la station BS1 vérifie que les blocs de ressources identiques à ceux alloués par BSn sont libres. L'extension de canal C-ExtDMO à établir dans la cellule C1 doit comprendre les mêmes blocs de ressources que le canal C-DMO établi dans la cellule courante afin que les terminaux du groupe enregistrés dans les deux cellules puissent communiquer directement entre eux.

Si à l'étape E13, le nombre de blocs de ressource n'est pas suffisant pour établir une extension de canal C-ExtDMO du canal C-DMO (N), la station de base BS1 notifie à l'étape E14, au terminal T4 l'impossibilité d'établir une extension de canal. L'interface IRbs de la station BS1 diffuse à tous les terminaux rattachés à la cellule C1 un message MA-ExtDMO d'établissement d'une extension. Le message est diffusé par l'intermédiaire du canal de contrôle DMO descendant de la cellule C1. Le message MA-ExtDMO contient l'identité du groupe ID-DMO et indique que l'extension C-ExtDMO ne peut être établie NOK. En variante, pour notifier que l'extension C-ExtDMO n'a pas pu être établie, la station de base transmet l'identité ID-DMO et des paramètres P-ExtDMO d'établissement d'une extension de canal de valeur nulle. Seuls les terminaux rattachés à la cellule C1 et appartenant au groupe ID-DMO, dans l'exemple le terminal T4, peuvent accéder au message MA-ExtDMO.

Le terminal T4, s'il est proche de la cellule Cn, peut se dé-enregistrer de la station de base BS1 et s'enregistrer auprès de la station de base BSn afin d'accéder à la communication DMO en cours dans la cellule Cn à partir du canal C-DMO.

Si à l'étape E13, le nombre de blocs de ressource est suffisant pour établir une extension de canal C-ExtDMO du canal C-DMO (Y), la station de base BS1 les alloue pour établir l'extension de canal C-ExtDMO dans la cellule C1. Puis à l'étape E15, le module Md-TA de la station de base BS1 détermine une valeur d'avance de temps TA1 en fonction de données temporelles provenant d'un ou des terminaux du groupe DMO enregistrés auprès de la station de base BS1. Le module Md-TA peut comparer la valeur d'avance de temps TA1 à la valeur d'avance de temps TAn. La différence des deux valeurs TA1 et TAn varie en fonction de la taille des cellules C1 et Cn. Si la différence de valeur d'avance de temps est importante entre la cellule Cn et la cellule C1, il peut y avoir un conflit de communication en mode direct dans le canal et l'extension de canal. En effet, si TA1 est petite devant TAn, les terminaux du groupe enregistrés auprès de la station BS1 ne vont pas se gêner dans leurs échanges directs via l'extension de canal dans C1, mais ils peuvent interférer sur des canaux de transport alloués à d'autres communications dans la cellule Cn. Dans ce cas, la station BS1 peut refuser d'établir l'extension de canal C-ExtDMO. Selon une autre variante, pour palier une trop grande différence d'avance de temps entre deux cellules, une règle d'utilisation des blocs de ressources peut être imposées aux terminaux du groupe rattachés à l'une ou l'autre cellule. Cette règle peut imposer aux terminaux du groupe rattachés à la cellule de plus petit taille ayant une petite valeur d'avance de temps de ne pas utiliser le ou des dernier(s) symbole(s) des blocs de ressource alloués au canal C-DMO ou à son extension C-ExtDMO dans ladite cellule. Ou selon une autre variante, cette règle peut imposer aux terminaux du groupe rattachés à la cellule de plus grande taille ayant une grande valeur d'avance de temps de ne pas utiliser le ou des premier(s) symbole(s) des blocs de ressource alloués au canal C-DMO ou à son extension C-ExtDMO dans ladite cellule. La station de base BS1 peut imposer aux terminaux du groupe enregistrés auprès d'elle une des règles précédentes d'utilisation des blocs de ressources en rapport à la taille de la cellule Cn. Ou, selon une variante, la station de base BS1 peut informer la station de base BSn, de la grande différence de valeur d'avance de temps et c'est la station de base BSn qui peut imposer une des règles précédentes d'utilisation des blocs de ressources aux terminaux du groupe enregistrés auprès d'elle. Puis à l'étape E16, lorsque l'extension du canal C-ExtDMO est établi, que la valeur d'avance de temps est déterminée et qu'une possible règle d'utilisation des blocs de ressources de l'extension est appliquée, l'interface IRbs de la station de base BS1 diffuse à tous les terminaux rattachés à la cellule C1 un message MA-ExtDMO d'établissement d'une extension de canal C-ExtDMO. Seuls les terminaux rattachés à la cellule C1 et appartenant au groupe ID-DMO, dans l'exemple le terminal T4, peuvent accéder au message MA-ExtDMO. Le message MA-ExtDMO comprend l'identité du groupe ID-DMO, les paramètres P-ExtDMO de l'extension de canal C-ExtDMO et la valeur TA1 d'avance de temps. Le message MA-ExtDMO peut comprendre également une règle d'utilisation des blocs de ressources alloués pour établir l'extension du canal C-ExtDMO. Le message MA-ExtDMO peut également comprendre une durée d'utilisation DU1 de l'extension de canal C-ExtDMO déterminée par la station de base SB1 en fonction du temps de disponibilité des blocs de ressources alloués pour ladite extension de canal C-ExtDMO dans C1. Cette durée DU1 peut être différente de la durée DUn. En effet, les blocs de ressources peuvent être libres pendant une certaine durée dans la cellule C1 puis de nouveau occupés par d'autres communications prioritaires relayées ou en mode direct dans cette même cellule C1 avant que la durée DUn relative à la cellule Cn soit totalement écoulée.

Puis à l'étape E17, l'interface IRt de chaque terminal du groupe de la cellule C1, dans l'exemple T4, reçoit le message MA-ExtDMO. Le module Md-DMO du terminal T4 applique ensuite les paramètres P-ExtDMO afin d'accéder à l'extension C-ExtDMO et de communiquer directement avec les autres terminaux du groupe se trouvant dans la cellule C1 et dans les autres cellules voisines ayant établi soit le canal C-DMO soit une extension de canal C-ExtDMO. Le module Md-DMO de chaque terminal applique également la valeur d'avance de temps TA1 pour que chaque terminal du groupe enregistré auprès de la cellule C1 puisse se synchroniser aux blocs de ressources alloués à l'extension de canal C-ExtDMO. Le module Md-DMO de chaque terminal peut également appliquer une règle d'utilisation des blocs de ressources présente dans le message MA-ExtDMO.

Le message MA-ExtDMO peut être diffusé par la station de base BS1 pendant toute la durée de la communication DMO afin que d'autres terminaux du groupe DMO qui vont s'enregistrer auprès de la station de base SB1 puissent communiquer en mode direct avec le groupe DMO en cours.

Puis à l'étape E18, l'extension de canal C-ExtDMO est maintenue établie tant qu'aucune notification Nt-END de fin de communication du groupe n'est transmise à la station de base BS1 (N). Cette notification Nt-END peut être transmise par un terminal du groupe rattaché à la cellule C1 et élu responsable pour notifier la fin de la communication DMO à la station de base BS1. Dans ce cas la notification est transmise via le canal de contrôle DMO montant. La notification Nt-END peut également être transmise à la station BS1 par la station de base BSn lorsque cette dernière à reçue la notification Nt-END à l'étape E6 illustrée sur la figure 4. La notification Nt-END peut également être transmise à la station BS1 par une autre station voisine qui a établi une extension de canal C-ExtDMO et qui a reçu une notification Nt-END d'un des terminaux du groupe rattaché à la dite cellule voisine. En variante, la notification Nt-END peut être générée par la station de base BS1 à la fin de l'écoulement de la durée DU1.

Dès que la station de base SB1 reçoit la notification Nt-END (Y), elle libère à l'étape E19 les blocs de ressources alloués à l'extension de canal C-ExtDMO pour d'autres communications relayées ou en mode direct dans la cellule C1.

Lorsque la station de base BS1 reçoit une notification de fin de communication provenant d'un des terminaux du groupe rattaché à la cellule C1, la station de base BS1 peut transmettre ladite notification à la station de base BSn pour que celle-ci en prenne compte à l'étape E6 de la figure 4. La station de base BS1 peut également transmettre ladite notification aux stations de base voisines pour fermer proprement le canal C-DMO et les extensions C-ExtDMO.

Au cours de la communication DMO dans la cellule C1, la station BSn peut notifier à la station BS1 qu'une modification du canal C-DMO dans la cellule Cn a eu lieu. La station BSn peut transmettre une notification Nt-DMO identique telle que transmise à l'étape E10. A la réception de la notification et selon la disponibilité des blocs de ressources, la station de base BS1 peut modifier ou non l'extension de canal C-ExtDMO dans la cellule C1 comme indiqué à l'étape E13. Puis les étapes E14 ou E15 à E19 sont exécutées.

Selon une variante de réalisation de l'exécution des étapes du procédé illustré à la figure 4, en revenant à l'étape E12, après réception de la notification Nt-DMO, le terminal T4, s'il est proche de la cellule Cn, peut se dé-enregistrer de la station de base BS1 et s'enregistrer auprès de la station de base BSn afin d'accéder à la communication DMO en cours dans la cellule Cn. Dans ce cas la station BS1 transmet uniquement l'information qu'une communication DMO est en cours dans la cellule Cn. Après enregistrement auprès de la station BSn, le terminal T4 reçoit, à l'étape E5 (figure 4), le message d'allocation MA-DMO via le canal de contrôle DMO descendant de la cellule Cn et accède à la communication DMO en cours. Dans cette variante, les étapes E13 à E19 ne sont pas exécutées.

Selon une variante de réalisation de l'exécution des étapes du procédé illustré à la figure 4, dès que la station de base BS1 a reçu la notification Nt-DMO à l'étape E10, elle considère la notification comme une requête d'établissement d'une extension de canal et elle tente d'allouer directement des blocs de ressources pour établir l'extension de canal C-ExtDMO à l'étape E13. Puis les étapes E14 ou E15 à E19 sont exécutées. Dans cette variante les étapes E11 et E12 ne sont pas exécutées.

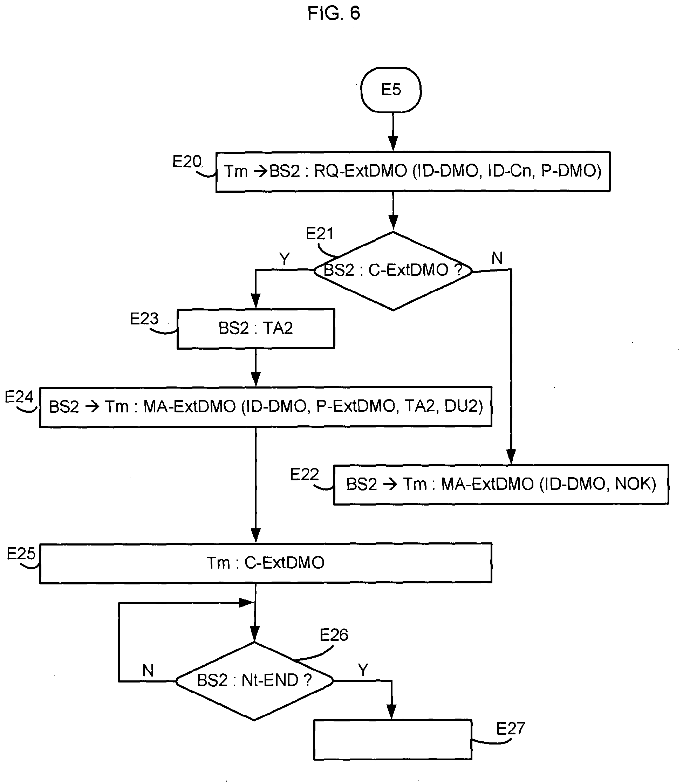

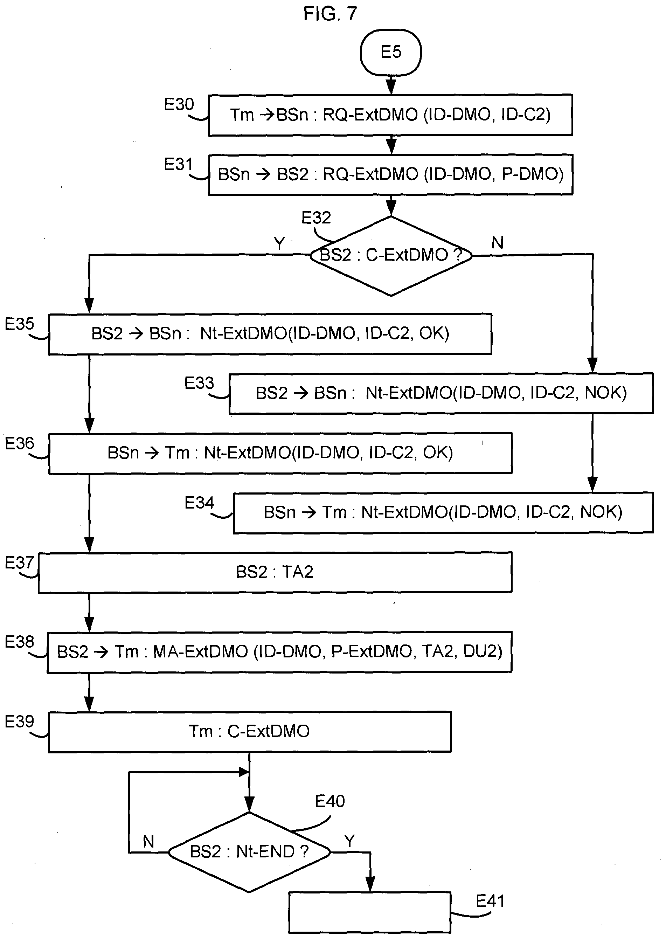

Les diagrammes fonctionnels illustrés aux figures 6 et 7 représentent deux variantes de réalisation de l'établissement d'une extension de canal C-ExtDMO du canal C-DMO dans une cellule voisine lors d'un déplacement du groupe DMO ou d'une partie du groupe DMO vers une cellule voisine. Dans ces deux réalisations la cellule voisine n'a pas encore établie d'extension de canal C-ExtDMO du canal C-DMO. Plus particulièrement, selon l'exemple proposé, les deux réalisations décrivent l'établissement d'une extension de canal C-ExtDMO du canal C-DMO dans la cellule C2 voisine de la cellule courante Cn par le terminal Tm, lors d'un déplacement du groupe DMO ou d'une partie du groupe DMO depuis la cellule courante Cn vers la cellule C2. En cours de communication DMO dans la cellule Cn, le terminal Tm se déplace et s'éloigne de la station de base BSn pour se rapprocher de la station de base BS2. Les signaux radio reçus par le terminal en provenance de la station BSn sont plus faibles que ceux de la station BS2. Le terminal doit donc effectuer un changement de cellule et demander une extension du canal C-DMO dans la nouvelle cellule pour ne pas sortir de la communication DMO. Dans l'exemple, Tm peut être un des premiers terminaux du groupe qui se rattache à la cellule C2 et donc qui demande l'établissement de l'extension de canal. En variante Tm peut être le terminal du groupe DMO, désigné pour demander l'établissement du canal C-DMO ou d'une extension du canal C-DMO pour le groupe ID-DMO.

Les étapes E20 à E27 de la figure 6 décrivent une première réalisation de l'établissement de l'extension de canal du canal C-DMO dans la cellule voisine C2 après que le terminal Tm en déplacement se soit enregistré auprès de la station C2. Le diagramme fonctionnel de la figure 6 commence à l'étape E5 du diagramme fonctionnel de la figure 4.

En cours de communication DMO dans la cellule courante Cn, le terminal Tm se déplace et s'éloigne de la station de base BSn pour se rapprocher de la station de base BS2. Le terminal Tm se dé-enregistre de la station BSn et s'enregistre auprès de la station BS2. Puis, à l'étape E20 dès que l'enregistrement est effectué, l'interface IRt du terminal Tm transmet à la station BS2 via le canal de contrôle DMO montant de la cellule C2 une requête d'établissement d'une extension de canal RQ-ExtDMO du canal C-DMO. La requête comprend l'identité ID-DMO du groupe, les paramètres P-DMO du canal C-DMO établi dans la cellule courante Cn. La requête peut comprendre également l'identité ID-Cn de la cellule Cn dans laquelle est établi le canal C-DMO.

Puis à l'étape E21, l'interface IRbs de la station BS2 reçoit la requête RQ-ExtDMO. Le module d'allocation Md-ALDMO de la station de base BS2 vérifie s'il peut allouer les mêmes blocs de ressources que ceux alloués dans la cellule courante Cn pour établir l'extension de canal C-ExtDMO du canal C-DMO. Pour cela le module Md-ALDMO de la station BS2 vérifie que les blocs de ressources identiques à ceux alloués par la station BSn sont libres. L'extension de canal C-ExtDMO à établir dans la cellule C2 doit comprendre les mêmes blocs de ressources que le canal C-DMO établi dans la cellule courante afin que les terminaux du groupe enregistrés dans les deux cellules puissent communiquer directement entre eux.

Si à l'étape E13, le nombre de blocs de ressource n'est pas suffisant pour former une extension de canal C-ExtDMO du canal C-DMO (N), la station de base BS2 notifie à l'étape E22, au terminal Tm l'impossibilité d'établir une extension du canal C-DMO. L'interface IRbs de la station BS2 diffuse à tous les terminaux rattachés à la cellule C2 un message MA-ExtDMO. Le message est diffusé par l'intermédiaire du canal de contrôle DMO descendant de la cellule C2. Le message MA-ExtDMO comprend l'identité du groupe ID-DMO et peut comprendre une information NOK indiquant que l'extension de canal ne peut être établie. En variante, pour notifier que l'extension de canal n'a pas pu être établie, la station de base transmet l'identité ID-DMO et des paramètres P-ExtDMO d'une extension de canal de valeur nulle. Seuls les terminaux rattachés à la cellule C2 et appartenant au groupe ID-DMO, dans l'exemple le terminal Tm, peuvent accéder au message MA-ExtDMO.

Le terminal Tm, s'il est proche de la cellule Cn, peut se dé-enregistrer de la station de base BS2 et s'enregistrer auprès de la station de base BSn afin d'accéder de nouveau à la communication DMO en cours via le canal C-DMO.

Si à l'étape E21, le nombre de blocs de ressource est suffisant pour établir une extension de canal C-ExtDMO du canal C-DMO (Y), la station de base BS2 les alloue pour établir l'extension de canal C-ExtDMO dans la cellule C2. Puis à l'étape E23, le module Md-TA de la station de base BS2 détermine une valeur d'avance de temps TA2 en fonction de données temporelles provenant d'un ou des terminaux du groupe DMO enregistrés auprès de la station de base BS2. Comme expliqué à l'étape E15 de la figure 5, la différence de valeur TAn et TA2 peut être importante et implique soit de ne pas établir l'extension de canal dans la cellule C2, soit d'imposer à l'une des deux cellules l'utilisation d'une règle d'utilisation des blocs de ressources alloués pour établir l'extension de canal.

Puis à l'étape E24, lorsque l'extension du canal C-ExtDMO est établi, que la valeur d'avance de temps TA2 est déterminée et qu'une possible règle d'utilisation des blocs de ressources de l'extension est appliquée, l'interface IRbs de la station de base BS2 diffuse à tous les terminaux rattachés à la cellule C2, un message MA-ExtDMO d'établissement d'une extension de canal C-ExtDMO. Seuls les terminaux appartenant au groupe ID-DMO, dans l'exemple le terminal Tm, peuvent accéder au message MA-ExtDMO. Le message MA-ExtDMO comprend l'identité du groupe ID-DMO, les paramètres P-ExtDMO de l'extension de canal C-ExtDMO et la valeur TA2 d'avance de temps. Le message MA-ExtDMO peut comprendre également, si nécessaire, la règle d'utilisation des blocs de ressources. Le message MA-ExtDMO peut également comprendre une durée d'utilisation DU2 de l'extension de canal C-ExtDMO déterminée par la station de base SB2 en fonction du temps de disponibilité des blocs de ressources alloués pour l'extension de canal C-ExtDMO dans C2. Cette durée DU2 peut être différente de la durée DUn ou de la durée DU1.

Puis à l'étape E25, l'interface IRt de chaque terminal du groupe de la cellule C2, dans l'exemple Tm, reçoit le message d'allocation MA-ExtDMO. Le module Md-DMO du terminal Tm applique ensuite les paramètres P-ExtDMO afin d'accéder à l'extension C-ExtDMO et de communiquer directement avec les autres terminaux du groupe se trouvant dans la cellule C2 et dans les autres cellules voisines ayant établi soit le canal C-DMO soit une extension de canal C-ExtDMO. Le module Md-DMO de chaque terminal applique également la valeur d'avance de temps TA2 pour que chaque terminal du groupe enregistré auprès de la cellule C2 puisse se synchroniser aux blocs de ressources alloués à l'extension de canal C-ExtDMO. Le module Md-DMO de chaque terminal peut également appliquer une règle d'utilisation des blocs de ressources présente dans le message MA-ExtDMO.

Le message MA-ExtDMO peut être diffusé par la station de base BS2 pendant toute la durée de la communication DMO afin que d'autres terminaux du groupe DMO qui vont s'enregistrer auprès de la station de base SB2 puissent communiquer en mode direct avec le groupe DMO en cours via le canal C-DMO et l'extension du canal C-ExtDMO.

Puis à l'étape E26, l'extension de canal C-ExtDMO est maintenue établie tant qu'aucune notification Nt-END de fin de communication du groupe n'est transmise à la station de base BS2 (N). La notification Nt-END est transmise à ou générée par la station de base BS2 de manière identique à la notification de fin de communication dans la station de base BS1 à l'étape E18.

Dès que la station de base SB2 reçoit la notification Nt-END (Y), elle libère à l'étape E27 les blocs de ressources alloués pour établir l'extension de canal C-ExtDMO du canal C-DMO pour d'autres communications relayées ou en mode direct dans la cellule C2.

Les étapes E30 à E42 de la figure 7 décrivent une deuxième réalisation de l'établissement d'une extension de canal du canal C-DMO dans la cellule voisine C2 avant que le terminal Tm en déplacement s'enregistre auprès de la station BS2. Le diagramme fonctionnel de la figure 7 commence à l'étape E5 du diagramme fonctionnel de la figure 4.

En cours de communication DMO dans la cellule courante Cn, le terminal Tm se déplace et s'éloigne de la station de base BSn pour se rapprocher de la station de base BS2. Le terminal doit effectuer un changement de cellule et demander une extension de canal du canal C-DMO dans la cellule C2 pour ne pas sortir de la communication DMO. Pour cela, à l'étape E30, le module Md-DMO du terminal Tm forme une requête RQ-ExtDMO d'établissement d'une extension de canal. L'interface IRt du terminal Tm transmet à la station de base courante BSn la requête RQ-ExtDMO par l'intermédiaire du canal de contrôle DMO montant. La requête RQ-ExtDMO comprend au moins l'identité ID-DMO du groupe DMO. La requête RQ-ExtDMO peut comprendre également l'identité ID-C2 de la cellule C2 dans laquelle une extension de canal est demandée.

Puis à l'étape E31, l'interface IFbs de la station BSn retransmet la requête RQ-ExtDMO à la station de base de la cellule C2. La cellule C2 peut être identifiée par la station BSn en fonction de l'identité ID-C2 présent dans la requête RQ-Ext DMO. En variante, la station de base diffuse à toutes les stations voisines la requête RQ-ExtDMO. Seule la station de base de la cellule dont l'identité est ID-C2, identité présente dans la requête, traite la requête.

A la réception de RQ-ExtDMO, à l'étape E32 qui est exécutée de manière identique à l'étape E21, le module d'allocation Md-ALDMO de la station de base BS2 vérifie s'il peut allouer les blocs de ressources relatifs aux paramètres P-DMO inclus dans la requête pour établir l'extension de canal C-ExtDMO du canal C-DMO.

Si à l'étape E32, le nombre de blocs de ressource n'est pas suffisant pour établir une extension de canal du canal C-DMO (N), la station de base BS2 transmets à la station de base courante BSn une notification Nt-ExtDMO à l'étape E33. La notification Nt-ExtDMO comprend l'identité du groupe ID-DMO, et une information NOK indiquant que l'extension du canal ne peut être établie. La notification peut également contenir l'identité ID-C2 de la cellule C2. En variante, pour notifier que l'extension de canal C-DMO n'a pas pu être établie, la station de base transmet l'identité ID-DMO et des paramètres P-ExtDMO d'une extension de canal de valeur nulle.

Puis à l'étape E34, la station de base BSn retransmet la notification Nt-DMO au terminal Tm.

Si à l'étape E32, le nombre de blocs de ressource est suffisant pour établir une extension de canal du canal C-DMO (Y), la station de base BS2 les alloue pour établir l'extension de canal C-ExtDMO du canal C-DMO dans la cellule C2. Puis à l'étape E35, la station de base BS2 transmets à la station de base BSn, une notification Nt-ExtDMO comprenant l'identité du groupe ID-DMO, et une information OK indiquant que l'extension de canal C-ExtDMO est établie. La notification Nt-ExtDMO peut également contenir l'identité ID-C2 de la cellule C2. A la réception de la notification Nt-ExtDMO, la station de base BSn retransmet la notification Nt-ExtDMO au terminal Tm, à l'étape E36. A la réception de la notification indiquant que l'extension de canal C-ExtDMO est établie dans la cellule C2, le terminal C2 se dé-enregistre de la station de base BSn pour s'enregistrer auprès de la station de base BS2.

Puis à l'étape E37, après enregistrement effective du terminal Tm auprès de la station BS2, le module Md-TA de la station de base BS2 détermine une valeur d'avance de temps TA2. Les étapes 37 à 41 sont identiques aux étapes 23 à 27 du premier mode de réalisation illustré à la figure 6.

Selon la disponibilité des blocs de ressources allouées à une cellule, une station de base peut allouer un ou plusieurs canaux C-DMO ou extension de canal C-ExtDMO respectivement pour plusieurs groupes de communication DMO différents agissant dans la cellule. Dans ce cas le canal de contrôle DMO montant et le canal de contrôle DMO descendant dans chaque cellule permet de véhiculer les messages et notification entre la station de base et les terminaux des différents groupes DMO. Les messages et notifications sont différenciés par l'identité ID-DMO du groupe compris dedans.

Dans la suite de la description sont présentés différentes réalisations de détermination de la valeur d'avance de temps TA, précédemment appelée TAn, TA1, TA2, et déterminée par chaque station de base du système de radio communication.

La valeur d'avance de temps est déterminée par le module Md-TA de chaque station de base en fonction de données temporelles provenant d'un ou de plusieurs terminaux du groupe DMO rattachés à la station de base. Cette donnée temporelle correspond à une valeur d'instant fixe produite par chaque terminal à chaque transmission d'un message depuis le terminal vers la station de base. La valeur d'instant fixe peut être émise dans une requête RQ-DMO, RQ-ExtDMO, lors de l'enregistrement du terminal auprès de la station de base ou à la demande de la station de base. Une fois déterminée, la valeur TA est transmise à tous les terminaux enregistrés auprès de la station de base. Les terminaux utilise la valeur TA pour améliorer leur transmission et éviter toute collision avec d'autres communications gérées par la station de base et contenues dans des blocs de ressources adjacents aux blocs de ressources alloués pour la communication DMO requise.

Selon une première réalisation, le module Md-TA détermine la valeur d'avance de temps à partir de la valeur d'instant fixe produite par le premier terminal initiateur de la communication DMO. Plus particulièrement, le module Md-TA mesure le temps de décalage entre l'instant de départ de la requête correspondant à la valeur d'instant fixe et le l'instant d'arrivée de la requête RQ-DMO à la station de base. Le module Md-TA estime ainsi le temps de propagation aller-retour entre le terminal et la station de base. Ce temps de propagation correspond à la valeur d'avance de temps TA. La valeur d'avance de temps peut-être périodiquement déterminée. Par exemple lorsque la station de base reçoit ou demande une nouvelle valeur d'instant fixe au terminal émetteur. Selon cette première réalisation, les autres terminaux du groupe DMO sont supposés proches du terminal émetteur de la requête, c'est pourquoi tous les terminaux du groupe DMO reçoive la valeur TA déterminée. Dans cette première réalisation la détermination de la valeur TA d'avance de temps n'est pas optimale puisqu'elle n'est déterminée qu'à partir d'une seule valeur d'instant fixe du terminal émetteur du groupe DMO.

Selon une deuxième réalisation, le module Md-TA détermine la valeur d'avance de temps TA à partir de toutes les valeurs d'instant fixe produites respectivement par tous les terminaux du groupe DMO qui sont enregistrés auprès de la station de base. Lors de l'enregistrement périodique ou non de chaque terminal auprès de la station de base, la station de base détermine une valeur d'avance de temps propre audit terminal. Puis, le module Md-TA détermine la valeur d'avance de temps moyenne en fonction de toutes les valeurs d'avance de temps propre à chaque terminal du groupe enregistré auprès de la station de base. La valeur TA est diffusée à tous les terminaux du groupe DMO enregistrés auprès de la station de base.

En variante, la donnée temporelle est déduite par le module Md-TA à partir d'un contrôle direct du canal C-DMO ou de l'extension de ce canal alloué(e) à la communication DMO. La station de base analyse toutes les communications DMO échangées entre les terminaux du groupe et détermine la valeur d'avance de temps de chaque échange. Par exemple en technologie LTE, la station de base observe les signaux de référence RS ("Reference signal" en anglais) inclus dans chaque transmission directe depuis un terminal émetteur. Puis la station de base les compare aux signaux de référence RS des blocs de ressources dédiés au canal C-DMO ou son extension de canal pour vérifier l'existence d'une dérive de temps. La valeur d'avance de temps est déterminée pour réajuster la dérive de temps.

Le module Md-TA peut appliquer une règle d'utilisation des blocs de ressource d'un canal DMO permettant d'assurer qu'il n'y aura pas d'interférence entre les blocs de ressource du à une avance de temps TA non optimale associée au canal DMO. Cette règle est utile lorsque le canal DMO est fragmenté en des blocs de ressources non contigües sur l'axe des temps. La règle consiste en ce que chaque premier et chaque dernier symbole OFDM de chaque bloc radio étant contigüe à un bloc radio n'appartenant pas au canal DMO du groupe ID-DMO, ne doivent pas être utilisés. La règle doit être connue par tous les terminaux aptes à communiquer en mode direct.

## Revendications

1. Procédé d'établissement d'une communication en mode direct pour des terminaux d'un groupe de communication en mode direct donné dans au moins une cellule courante (Cn) d'un système de radiocommunication (SY) large bande comportant une pluralité de cellules, chaque cellule du système comprenant une station de base, le procédé comprenant les étapes suivantes :
- une transmission (E1) d'une requête (RQ-DMO) d'établissement d'un canal de communication en mode direct vers la station de base courante (BSn) de la cellule courante par un terminal (Tm) du groupe enregistré auprès de ladite station de base, la requête comprenant une identité (ID-DMO) du groupe et des paramètres de qualité de service (P-QoS) spécifiques à la communication en mode direct demandée,
- après réception de la requête par la station de base courante, un établissement (E2) d'un canal de communication en mode direct (C-DMO) en allouant des blocs de ressources libres sélectionnés parmi un ensemble de blocs de ressources alloués à la cellule courante, en fonction des paramètres de qualité de service,
- une détermination (E4) d'une valeur d'avance de temps (TAn) par la station de base courante (BSn) en fonction d'au moins une donnée temporelle,
- une transmission (E5) d'un message d'établissement (MA-DMO) du canal, transmis par la station de base courante aux terminaux enregistrés auprès de ladite station de base courante, le message comprenant l'identité (ID-DMO) du groupe, des paramètres d'établissement (P-DMO) du canal établi et la valeur d'avance de temps (TAn) déterminée, et
- après réception du message d'établissement par les terminaux du groupe enregistrés auprès de la station de base courante, un accès (E6) de chacun desdits terminaux au canal de communication en mode direct (C-DMO) à partir des paramètres d'établissement (P-DMO) transmis pour communiquer directement avec lesdits autres terminaux du groupe et une synchronisation des terminaux entre eux en fonction de la valeur d'avance de temps (TAn).

2. Procédé selon la revendication 1, dans lequel la donnée temporelle est une valeur d'instant fixe produite par au moins un terminal du groupe, enregistré auprès de la station de base courante (BSn), et est transmise à la station de base courante (BSn) ou bien la donnée temporelle est contenue dans le canal de communication en mode direct (C-DMO) établi et est mesurée par la station de base courante (BSn).

3. Procédé selon la revendication 1 ou 2, dans lequel la valeur d'avance de temps (TAn) correspond à la moyenne des valeurs d'avance de temps chacune déterminée pour chaque terminal du groupe, enregistré auprès de la station de base.

4. Procédé selon l'une quelconque des revendications précédentes, dans lequel le canal de communication en mode direct (C-DMO) établi (E2) est sous-dimensionné si le nombre de blocs de ressources libres ne correspond pas aux paramètres de qualité de service reçus (P-QoS).

5. Procédé selon l'une quelconque des revendications précédentes, dans lequel la station de base courante (BSn) libère (E9) les blocs de ressources alloués pour le canal de communication en mode direct (C-DMO) à la réception (E8) d'une notification (Nt-END) de fin de communication en mode direct provenant d'un terminal du groupe enregistré auprès de ladite station courante (BSn) ou à la génération d'une notification (Nt-END) de fin de communication par le la station de base courante à la fin d'une durée d'utilisation (DUn).

6. Procédé selon l'une quelconque des revendications précédentes, comprenant après l'établissement (E2) du canal de communication en mode direct (C-DMO) dans la cellule courante, une transmission (E12, E20, E31) d'une requête (RQ-ExtDMO) d'établissement d'une extension de canal (C-ExtDMO) du canal de communication en mode direct (C-DMO) à au moins une station de base (BS1, BS2) d'une cellule voisine de la cellule courante.

7. Procédé selon la revendication 6, dans lequel la requête (RQ-ExtDMO) d'établissement d'une extension de canal comprend les paramètres d'établissement (P-DMO) du canal de communication en mode direct (C-DMO) et est transmise (E31) par la station de base courante ou est transmise (E20) par un terminal du groupe qui s'est dé-enregistré de la station de base courante et s'est enregistré auprès de la station de base voisine.

8. Procédé selon la revendication 6, comprenant après l'établissement (E2) du canal de communication en mode direct (C-DMO) :
- une transmission (E10) d'une notification (Nt-DMO) d'établissement dudit canal par la station de base courante à la station de base voisine, la notification comprenant les paramètres d'établissement (P-DMO) dudit canal (C-DMO),
- une diffusion (E11) de ladite notification aux terminaux enregistrés auprès de la dite station de base voisine afin que parmi l'un de ces terminaux, un terminal du groupe transmette (E12) la requête (RQ-ExtDMO) d'établissement d'une extension de canal à la station de base voisine.

9. Procédé selon l'une quelconque des revendications 6 à 8, comprenant dans la station de base voisine et après réception (E12, E20, E31) de la requête d'établissement d'une extension de canal (RQ-ExtDMO) :
- un établissement (E13, E21, E32) d'une extension de canal (C-ExtDMO) du canal de communication en mode direct en allouant des blocs de ressources libres sélectionnés parmi un ensemble de blocs de ressources alloués à la cellule voisine, en fonction des paramètres d'établissement (P-DMO) du canal,
- une transmission (E16, E24, E38) d'un message (MA-ExtDMO) d'établissement d'une extension de canal, depuis la station de base voisine vers les terminaux enregistrés auprès de ladite station de base, le message comprenant l'identité (ID-DMO) du groupe et des paramètres d'établissement (P-ExtDMO) de l'extension de canal (C-ExtDMO), et
- après réception du message d'établissement d'une extension de canal par les terminaux du groupe, enregistrés auprès de la station de base voisine, un accès (E17, E25, E39) de chacun desdits terminaux à l'extension de canal (C-ExtDMO) du canal de communication en mode direct (C-DMO) à partir des paramètres d'établissement (P-ExtDMO) de l'extension de canal pour communiquer directement avec lesdits terminaux du groupe.

10. Procédé selon la revendication 9, comprenant après réception de la requête d'établissement d'une extension de canal (RQ-ExtDMO) :
- une détermination (E15, E23, E37) d'une valeur d'avance de temps (TA1, TA2) par la station de base voisine (BS1, BS2) en fonction d'au moins une donnée temporelle, et
- une transmission de la valeur d'avance de temps déterminée via le message d'établissement d'une extension (MA-ExtDMO) aux terminaux du groupe enregistrés auprès de la station de base voisine afin que lesdits terminaux se synchronisent entre eux.

11. Procédé selon la revendication 10, dans lequel après la détermination d'une valeur d'avance de temps par une station de base voisine, si la différence des valeurs d'avance de temps déterminées respectivement par la station de base courante et la station de base voisine est importante, la station de base voisine n'établie pas l'extension de canal ou au moins une des deux stations de base peut imposer au terminaux du groupe enregistrés auprès d'elle, une règle d'utilisation spécifiant de ne pas utiliser certains symboles de fenêtres temporelles correspondant aux blocs de ressources alloués pour établir le canal ou l'extension de canal.

12. Procédé selon l'une quelconque des revendications précédentes, dans lequel la transmission d'une requête d'établissement d'un canal de communication en mode direct (RQ-DMO) ou d'une requête d'établissement d'une extension de canal (RQ-ExtDMO) se fait à travers un canal de contrôle montant dédié au mode direct depuis un terminal du groupe, enregistré auprès d'une station de base du système de radiocommunication vers ladite station de base.

13. Procédé selon l'une quelconque des revendications précédentes, dans lequel la transmission d'un message d'établissement d'un canal de communication en mode direct (MA-DMO) ou d'un message d'établissement d'une extension de canal (MA-ExtDMO) se fait à travers un canal de contrôle descendant dédié au mode direct depuis une station de base du système de radiocommunication vers les terminaux du groupe, enregistrés auprès de ladite station de base.

14. Station de base (BSn, BS1, BS2) d'une cellule d'un système (SY) de radiocommunication large bande, le système comportant une pluralité de cellules chacune comportant une station de base, et au moins un terminal d'un groupe de communication en mode direct donné étant enregistré auprès de la station de base, la station de base comprenant :
- un moyen (IRbs) pour recevoir une requête (RQ-DMO) d'établissement d'un canal de communication en mode direct transmise par le terminal (Tm) auprès de la station de base, la requête comprenant une identité (ID-DMO) du groupe et les paramètres de qualité de service (P-QoS) spécifiques à la communication en mode direct demandée,
- un moyen (Md-ALDMO) pour établir un canal de communication en mode direct (C-DMO) en allouant des blocs de ressources libres sélectionnés parmi un ensemble de blocs de ressources alloués à la cellule, en fonction des paramètres de qualité de service),
- un moyen (Md-TA) pour déterminer une valeur d'avance de temps (TAn) en fonction d'au moins une donnée temporelle,
- un moyen (IRbs) pour transmettre un message d'établissement (MA-DMO) du canal vers les terminaux enregistrés auprès de ladite station de base, le message comprenant l'identité (ID-DMO) du groupe et des paramètres d'établissement (P-DMO) du canal formé et la valeur d'avance de temps (TAn) déterminée, le message étant transmis afin que chaque terminal du groupe enregistrés auprès de la station de base accède au canal de communication en mode direct (C-DMO) à partir des paramètres d'établissement (P-DMO) pour communiquer directement avec lesdits autres terminaux du groupe et afin que les terminaux se synchronisent entre eux en fonction de la valeur d'avance de temps,
les moyens de la station de base mettant en œuvre des étapes du procédé d'établissement d'une communication en mode direct selon l'une quelconque des revendications 1 à 13.

15. Terminal appartenant à un groupe de communication en mode direct donné et enregistré auprès d'une station de base (BSn, BS1, BS2) d'une cellule d'un système (SY) de radiocommunication large bande, le système comportant une pluralité de cellules chacun comportant une station de base, le terminal comprenant:
- un moyen (IRt) pour transmettre une requête (RQ-DMO) d'établissement d'un canal de communication en mode direct (C-DMO) à la station de base, la requête comprenant une identité (ID-DMO) du groupe et des paramètres de qualité de service (P-QoS) spécifiques à la communication en mode direct demandée, la requête étant transmise afin que la station de base établisse un canal de communication en mode direct (C-DMO) en allouant des blocs de ressources libres sélectionnés parmi un ensemble de blocs de ressources alloués à la cellule courante, en fonction des paramètres de qualité de service et afin que la station de base détermine une valeur d'avance de temps (TAn) en fonction d'au moins une donnée temporelle,
- un moyen (IRt) pour recevoir un message d'établissement (MA-DMO) du canal provenant de la station de base, le message comprenant l'identité (ID-DMO) du groupe, des paramètres d'établissement (P-DMO) du canal établi et la valeur d'avance de temps déterminée (TAn) par la station de base, et
- un moyen (Md-DMO) pour accéder au canal de communication en mode direct (C-DMO) à partir des paramètres d'établissement (P-DMO) transmis afin de communiquer directement avec lesdits autres terminaux du groupe et pour synchroniser le terminal aux autres terminaux du groupe en fonction de la valeur d'avance de temps (TAn) ;
les moyens du terminal mettant en œuvre des étapes du procédé d'établissement d'une communication en mode direct selon l'une quelconque des revendications 1 à 13.

## Patentansprüche

1. Aufbauverfahren einer Kommunikation im direkten Modus für Terminals einer bestimmten Kommunikationsgruppe im direkten Modus in wenigstens einer aktuellen Zelle (Cn) eines Breitband-Funkkommunikationssystems (SY), das eine Vielzahl von Zellen umfasst, wobei jede Zelle des Systems eine Basisstation umfasst, wobei das Verfahren die folgenden Schritte umfasst:
- eine Übertragung (E1) einer Anforderung (RQ-DMO) zum Aufbau eines Kommunikationskanals im direkten Modus zur aktuellen Basisstation (BSn) der aktuellen Zelle durch ein Terminal (TM) der Gruppe, das bei der genannten Basisstation angemeldet ist, wobei die Anforderung eine Identität (ID-DMO) der Gruppe und Parameter der Dienstqualität (P-QoS) umfasst, die spezifisch für die angefragte Kommunikation im direkten Modus ist,
- nach dem Empfang der Anforderung durch die aktuelle Basisstation ein Aufbau (E2) eines Kommunikationskanals im direkten Modus (C-DMO) durch Zuordnen von freien Ressourcenblöcken, die aus einer Gruppe von Ressourcenblöcken ausgewählt werden, die der aktuellen Zelle in Abhängigkeit von den Parametern der Dienstqualität zugeordnet werden,
- eine Bestimmung (E4) eines Zeitfortschrittswertes (TAn) durch die aktuelle Basisstation (BSn) in Abhängigkeit von wenigstens einem zeitlichen Datenelement,
- eine Übertragung (E5) einer Aufbaunachricht (MA-DMO) des Kanals, die von der aktuellen Basisstation auf die Terminals übertragen wird, die bei der aktuellen Basisstation angemeldet sind, wobei die Nachricht die Identität (ID-DMO) der Gruppe, Aufbauparameter (P-DMO) des aufgebauten Kanals und den bestimmten Fortschrittswert der Zeit (Tan) umfasst, und
- nach dem Empfang der Aufbaunachricht durch die Terminals der Gruppe, die bei der aktuellen Basisstation angemeldet sind, einen Zugang (E6) jedes der genannten Terminals zum Kommunikationskanal im direkten Modus (C-DMO) ausgehend von den Aufbauparametern (P-DMO), die zum direkten Kommunizieren mit den genannten anderen Terminals der Gruppe übertragen werden, und eine Synchronisation der Terminals zwischen ihnen in Abhängigkeit des Fortschrittswertes der Zeit (Tan).

2. Verfahren gemäß Anspruch 1, bei dem das zeitliche Datenelement ein fester Augenblickswert ist, der von wenigstens einem Terminal der Gruppe erzeugt wird, das an der aktuellen Basisstation (BSn) angemeldet ist, und auf die aktuelle Basisstation (BSn) übertragen wird, oder das zeitliche Datenelement ist in dem aufgebauten Kommunikationskanal im direkten Modus (C-DMO) enthalten und wird von der aktuellen Basisstation (BSn) gemessen.

3. Verfahren gemäß Anspruch 1 oder 2, bei dem der Fortschrittswert der Zeit (TAn) dem Durchschnitt der Fortschrittswerte der Zeit entspricht, von denen jeder für jedes Terminal der Gruppe bestimmt wird, das an der Basisstation angemeldet ist.

4. Verfahren gemäß irgendeinem der voranstehenden Ansprüche, bei dem der aufgebaute (E2) Kommunikationskanal im direkten Modus (C-DMO) unterdimensioniert ist, wenn die Anzahl von freien Ressourcenblöcken nicht den empfangenen Parametern der Dienstqualität (P-QoS) entspricht.

5. Verfahren gemäß irgendeinem der voranstehenden Ansprüche, bei dem die aktuelle Basisstation (BSn) die Ressourcenblöcke freigibt (E9), die für den Kommunikationskanal im direkten Modus (C-DMO) für den Empfang (E8) einer Benachrichtigung (Nt-END) über das Ende der Kommunikation im direkten Modus, die von einem Terminal der Gruppe stammt, das an der aktuellen Basisstation (BSn) angemeldet ist, oder dem Erzeugen einer Benachrichtigung (Nt-END) am Ende der Kommunikation durch die aktuelle Basisstation am Ende einer Nutzungsdauer (DUn) zugeteilt werden.

6. Verfahren gemäß irgendeinem der voranstehenden Ansprüche, umfassend nach dem Aufbau (E2) des Kommunikationskanals im direkten Modus (C-DMO) in der aktuellen Zelle eine Übertragung (E12, E20, E31) einer Anforderung (RQ-ExtDMO) zum Aufbau einer Kanalerweiterung (C-ExtDMO) des Kommunikationskanals im direkten Modus (C-DMO) auf wenigstens eine Basisstation (BS1, BS2) einer der aktuellen Zelle benachbarten Zelle.

7. Verfahren gemäß Anspruch 6, bei dem die Anforderung (RQ-ExtDMO) zum Aufbau einer Kanalerweiterung die Aufbauparameter (P-DMO) des Kommunikationskanals im direkten Modus (C-DMO) umfasst und von der aktuellen Basisstation (E31) übertragen wird oder von einem Terminal der Gruppe übertragen wird (E20), das sich von der aktuellen Basisstation abgemeldet hat und sich an der benachbarten Basisstation angemeldet hat.

8. Verfahren gemäß Anspruch 6, umfassend nach dem Aufbau (E2) des Kommunikationskanals im direkten Modus (C-DMO):
- eine Übertragung (E10) einer Aufbaubenachrichtigung (Nt-DMO) des genannten Kanals durch die aktuelle Basisstation an die benachbarte Basisstation, wobei die Benachrichtigung die Aufbauparameter (P-DMO) des genannten Kanals (C-DMO) umfasst,
- eine Weiterleitung (E11) der genannten Benachrichtigung an die Terminals, die bei der genannten benachbarten Basisstation angemeldet sind, damit von einem dieser Terminals ein Terminal der Gruppe die Anforderung (RQ-ExtDMO) zum Aufbau einer Kanalerweiterung auf die benachbarte Basisstation überträgt (E12).

9. Verfahren gemäß irgendeinem der Ansprüche 6 bis 8, umfassend in der benachbarten Basisstation und nach dem Empfang (E12, E20, E31) der Anforderung zum Aufbau einer Kanalerweiterung (RQ-ExtDMO):
- einen Aufbau (E13, E21, E32) einer Kanalerweiterung (C-ExtDMO) des Kommunikationskanals im direkten Modus durch Zuordnen von freien Ressourcen, die aus einer Gruppe von Ressourcenblöcken ausgewählt werden, die der benachbarten Zelle in Abhängigkeit von den Aufbauparametern (P-DMO) des Kanals zugeordnet werden,
- eine Übertragung (E16, E24, E38) einer Nachricht (MA-ExtDMO) zum Aufbau einer Kanalerweiterung ausgehend von der benachbarten Basisstation zu den Terminals, die bei der genannten Basisstation angemeldet sind, wobei die Nachricht die Identität (ID-DMO) der Gruppe und die Aufbauparameter (P-ExtDMO) der Kanalerweiterung (C-ExtDMO) umfassen, und
- nach dem Empfang der Aufbaunachricht einer Kanalerweiterung durch die Terminals der Gruppe, die bei der benachbarten Basisstation angemeldet sind, einen Zugang (E17, E25, E39) jedes der genannten Terminals zur Kanalerweiterung (C-ExtDMO) des Kommunikationskanals im direkten Modus (C-DMO) ausgehend von den Aufbauparametern (P-ExtDMO) der Kanalerweiterung zum direkten Kommunizieren mit den genannten Terminals der Gruppe.

10. Verfahren gemäß Anspruch 9, umfassend nach dem Empfang der Anforderung zum Aufbau einer Kanalerweiterung (RQ-ExtDMO):
- eine Bestimmung (E15, E23, E37) eines Fortschrittswertes der Zeit (TA1, TA2) durch die benachbarte Basisstation (BS1, BS2) in Abhängigkeit von wenigstens einem zeitlichen Datenelement und
- eine Übertragung des bestimmten Fortschrittswertes der Zeit über die Aufbaunachricht einer Erweiterung (MA-ExtDMO) an die Terminals der Gruppe, die bei der benachbarten Basisstation angemeldet sind, damit die genannten Terminals sich untereinander synchronisieren.

11. Verfahren gemäß Anspruch 10, bei dem nach der Bestimmung eines Fortschrittswertes der Zeit durch eine benachbarte Basisstation die benachbarte Basisstation nicht die Kanalerweiterung aufbaut oder wenigstens eine der zwei Basisstationen den Terminals der Gruppe, die bei ihr angemeldet sind, eine Nutzungsregel auferlegen kann, die vorschreibt, dass bestimmte Symbole von Zeitfenstern, die den Ressourcenblöcken entsprechen, die zum Aufbauen des Kanals oder der Kanalerweiterung zugeordnet werden, nicht zu nutzen, wenn der Unterschied der Fortschrittswerte der Zeit, die jeweils von der aktuellen Basisstation und der benachbarten Basisstation bestimmt werden, hoch ist.

12. Verfahren gemäß irgendeinem der voranstehenden Ansprüche, bei dem die Übertragung einer Anforderung eines Kommunikationskanals im direkten Modus (RQ-DMO) oder einer Anforderung zum Aufbau einer Kanalerweiterung (RQ-ExtDMO) über einen aufsteigenden Steuerkanal erfolgt, der im direkten Modus gemäß einem Terminal der Gruppe dediziert ist, das bei einer Basisstation des Funkkommunikationssystems zu der genannten Basisstation angemeldet ist.

13. Verfahren gemäß irgendeinem der voranstehenden Ansprüche, bei dem die Übertragung einer Aufbaunachricht eines Kommunikationskanals im direkten Modus (MA-DMO) oder einer Aufbaunachricht einer Kanalerweiterung (MA-ExtDMO) über einen absteigenden Steuerkanal erfolgt, der dem direkten Modus ausgehend von einer Basisstation des Funkkommunikationssystems zu den Terminals der Gruppe dediziert wird, die bei der genannten Basisstation angemeldet sind.

14. Basisstation (BSn, BS1, BS2) einer Zelle eines Systems (SY) mit Breitband-Funkkommunikation, wobei das System eine Vielzahl von Zellen umfasst, wobei jede eine Basisstation umfasst, und wenigstens ein Terminal einer bestimmten Kommunikationsgruppe im direkten Modus, das bei der Basisstation angemeldet ist, wobei die Basisstation umfasst:
- ein Mittel (IRs) zum Empfangen einer Anforderung (RQ-DMO) zum Aufbau eines Kommunikationskanals im direkten Modus, die vom Terminal (Tm) bei der Basisstation übertragen wird, wobei die Anforderung eine Identität (ID-DMO) der Gruppe und die spezifischen Parameter der Dienstqualität (P-QoS) für die angeforderte Kommunikation im direkten Modus umfasst,
- ein Mittel (Md-ALDMO) zum Aufbauen eines Kommunikationskanals im direkten Modus (C-DMO) durch Zuordnen von freien Ressourcenblöcken; die aus einer Gruppe von Ressourcenblöcken ausgewählt werden, die der Zelle in Abhängigkeit von den Parametern der Dienstqualität zugeordnet werden,
- ein Mittel (Md-TA) zum Bestimmen eines Fortschrittswertes der Zeit (Tan) in Abhängigkeit wenigstens eines zeitlichen Datenelements,
- ein Mittel (IRbs) zum Übertragen einer Aufbaunachricht (MA-DMO) des Kanals über die Terminals, die bei der genannten Basisstation angemeldet sind, wobei die Nachricht die Identität (ID-DMO) der Gruppe und die Aufbauparameter (P-DMO) des gebildeten Kanals und den bestimmten Fortschrittswert der Zeit (TAn) umfasst, wobei die Nachricht übertragen wird, damit jedes Terminal der Gruppe, das bei der Basisstation angemeldet ist, im direkten Modus (C-DMO) ausgehend von den Aufbauparametern (P-DMO) auf den Kommunikationskanal zugreift, um direkt mit den genannten anderen Terminals der Gruppe zu kommunizieren und damit die Terminals sich untereinander in Abhängigkeit des Fortschrittswertes der Zeit synchronisieren,
- wobei die Mittel der Basisstation Schritte des Aufbauverfahrens einer Kommunikation im direkten Modus gemäß irgendeinem der Ansprüche 1 bis 13 umsetzen.

15. Terminal, das zu einer bestimmten Kommunikationsgruppe im direkten Modus gehört und bei einer Basisstation (BSn, BS1, BS2) einer Zelle eines Breitband-Funkkommunikationssystems (SY) gehört, wobei das System eine Vielzahl von Zellen umfasst, die jeweils eine Basisstation umfassen, wobei das Terminal umfasst:
- ein Mittel (IRt) zum Übertragen einer Anforderung (RQ-DMO) zum Aufbau eines Kommunikationskanals im direkten Modus (C-DMO) auf die Basisstation, wobei die Anforderung eine Identität (ID-DMO) der Gruppe und spezifische Parameter der Dienstqualität (P-QoS) für die angeforderte Kommunikation im direkten Modus umfasst, wobei die Anforderung übertragen wird, damit die Basisstation einen Kommunikationskanal im direkten Modus (C-DMO) aufbaut, indem sie freie Ressourcenblöcke zuordnet, die aus einer Gruppe von Ressourcenblöcken ausgewählt sind, die der aktuellen Zelle in Abhängigkeit von den Parametern der Dienstqualität zugeordnet werden, und damit die Basisstation einen Fortschrittswert der Zeit (TAn) in Abhängigkeit von wenigstens einem zeitlichen Datenelement bestimmt,
- ein Mittel (IRt) zum Empfangen einer Aufbaunachricht (MA-DMO) des Kanals, die aus der Basisstation stammt, wobei die Nachricht die Identität (ID-DMO) der Gruppe, die Aufbauparameter (P-DMO) des aufgebauten Kanals und den bestimmten Fortschrittswert der Zeit (TAn) durch die Basisstation umfasst, und
- ein Mittel (Md-DMO) zum Zugreifen auf den Kommunikationskanal im direkten Modus (C-DMO) ausgehend von den Aufbauparametern (P-DMO), die zum direkten Kommunizieren mit den genannten anderen Terminals der Gruppe und zum Synchronisieren des Terminals mit den anderen Terminals der Gruppe in Abhängigkeit des Fortschrittswertes der Zeit (TAn) übertragen werden,
- wobei die Mittel des Terminals Schritte des Aufbauverfahrens einer Kommunikation im direkten Modus gemäß irgendeinem der Ansprüche 1 bis 13 umsetzen.

## Claims

1. Method for establishing a direct mode communication for terminals of a given direct mode communication group in at least one current cell (Cn) of a wideband radio communication system (SY) comprising a plurality of cellules, each cell of the system comprising a base station, the method comprising the following steps:
- a transmission (E1) of a request (RQ-DMO) to set up a direct mode communication channel to the current base station (BSn) of the current cell by a terminal (Tm) of the group registered with said base station, the request comprising an identity (ID-DMO) of the group and quality of service parameters (P-QoS) specific to the requested direct mode communication,
- after the request is received by the current base station, a setting up (E2) of a direct mode communication channel (C-DMO) by allocating blocks of free resources selected from among a set of blocks of resources allocated to the current cell, according to the quality of service parameters,
- a determining (E4) of a timing advance value (TAn) by the current base station (BSn) according to at least one piece of temporal data,
- a transmitting (E5) of a message of the setting up (MA-DMO) of the channel, transmitted by the current base station to the terminals registered with said current base station, the message comprising the identity (ID-DMO) of the group, parameters for setting up (P-DMO) the established channel and the determined timing advance value (TAn), and
- after reception of the message of the setting up by the terminals of the group registered with the current base station, an access (E6) of each of said terminals to the direct mode communication channel (C-DMO) using the parameters for setting up (P-DMO) transmitted to communicate directly with said other terminals of the group and a synchronisation of the terminals with each other according to the timing advance value (TAn).

2. Method according to claim 1, wherein the piece of temporal data is a fixed instantaneous value produced by at least one terminal of the group, registered with the current base station (BSn), and is transmitted to the current base station (BSn) or the piece of temporal data is contained in the set up direct mode communication channel (C-DMO) and is measured by the current base station (BSn).

3. Method according to claim 1 or 2, wherein the timing advance value (TAn) corresponds to the average of the timing advance values each one determined for each terminal of the group, recorded with the base station.

4. Method according to any preceding claim, in which the set up (E2) direct mode communication channel (C-DMO) is under-dimensioned if the number of blocks of free resources does not correspond to the received quality of service parameters (P-QoS).

5. Method according to any preceding claim, wherein the current base station (BSn) releases (E9) the blocks of resources allocated for the direct mode communication channel (C-DMO) upon reception (E8) of a notification (Nt-END) of the end of communication in direct mode coming from a terminal of the group registered with said current station (BSn) or the generating of a notification (Nt-END) of the end of communication by the current base station at the end of a duration of use (DUn).

6. Method according to any preceding claim, comprising after the setting up (E2) of the direct mode communication channel (C-DMO) in the current cell, a transmitting (E12, E20, E31) of a request (RQ-ExtDMO) to set up an channel extension (C-ExtDMO) of the direct mode communication channel (C-DMO) to at least one base station (BS1, BS2) of a neighbouring cell of the current cell.

7. Method according to claim 6, wherein the request (RQ-ExtDMO) for setting up a channel extension comprises the parameters for setting up (P-DMO) of the direct mode communication channel (C-DMO) and is transmitted (E31) by the current base station or is transmitted (E20) by a terminal of the group that is de-registered from the current base station and that has registered with the neighbouring base station.

8. Method according to claim 6, comprising after the setting up (E2) of the direct mode communication channel (C-DMO):
- a transmitting (E10) of a notification (Nt-DMO) of the setting up of said channel by the current base station to the neighbouring base station, the notification comprising the parameters for setting up (P-DMO) said channel (C-DMO),
- a distribution (E11) of said notification to the terminals registered with said neighbouring base station so that among one of these terminals, a terminal of the groups transmits (E12) the request (RQ-ExtDMO) for setting up a channel extension to the neighbouring base station.

9. Method according to any of claims 6 to 8, comprising in the neighbouring base station and after reception (E12, E20, E31) of the request for setting up a channel extension (RQ-ExtDMO):
- a setting up (E13, E21, E32) of a channel extension (C-ExtDMO) of the direct mode communication channel by allocating blocks of free resources selected from among a set of blocks of resources allocated to the neighbouring cell, according to the parameters for setting up (P-DMO) the channel,
- a transmitting (E16, E24, E38) of a message (MA-ExtDMO) for establishing a channel extension, from the neighbouring base station to the terminals registered with said base station, the message comprising the identity (ID-DMO) of the group and parameters for setting up (P-ExtDMO) the channel extension (C-ExtDMO), and
- after the message for setting up a channel extension is received by the terminals of the group, registered with the neighbouring base station, an access (E17, E25, E39) of each one of said terminals to the channel extension (C-ExtDMO) of the direct mode communication channel (C-DMO) using the parameters for setting up (P-ExtDMO) of the channel extension in order to communicate directly with said terminals of the group.

10. Method according to claim 9, comprising after reception of the request for setting up a channel extension (RQ-ExtDMO):
- a determining (E15, E23, E37) of a timing advance value (TA1, TA2) by the neighbouring base station (BS1, BS2) according to at least one piece of temporal data, and
- a transmitting of the timing advance value determined via the message for setting up an extension (MA-ExtDMO) to the terminals of the group registered with the neighbouring base station so that said terminals synchronise with each other.

11. Method according to claim 10, wherein after the determining of a timing advance value by a neighbouring base station, if the difference of the timing advance values determined respectively by the current base station and the neighbouring base station is substantial, the neighbouring base station does not set up the channel extension or at least one of the two base stations can impose upon the terminals of the group registered with it, a rule for use that specifies to not use certain time window symbols corresponding to the blocks of resources allocated to set up the channel or the channel extension.

12. Method according to any preceding claim, wherein the transmission of a request for setting up a direct mode communication channel (RQ-DMO) or of a request for setting up a channel extension (RQ-ExtDMO) is done through a rising control channel dedicated to the direct mode from a terminal of the group, registered with a base station of the radio communication system to said base station.

13. Method according to any preceding claim, wherein the transmitting of a message of setting up a direct mode communication channel (MA-DMO) or of a message of setting up a channel extension (MA-ExtDMO) is done through a descending control channel dedicated to the direct mode from a base station of the radio communication system to the terminals of the group, registered with said base station.

14. Base station (BSn, BS1, BS2) of a cell of a wideband radio communication system (SY), the system comprising a plurality of cells, each one comprising a base station, and at least one terminal of a given direct mode communication group being registered with the base station, the base station comprising:
- a means (IRbs) for receiving a request (RQ-DMO) for setting up a direct mode communication channel transmitted by the terminal (Tm) to the base station, the request comprising an identity (ID-DMO) of the group and quality of service parameters (P-QoS) specific to the requested direct mode communication,
- a means (Md-ALDMO) for setting up a direct mode communication channel (C-DMO) by allocating blocks of free resources selected from among a set of blocks of resources allocated to the cell, according to the quality of services parameters,
- a means (Md-TA) for determining a timing advance value (TAn) according to at least one piece of temporal data,
- a means (IRbs) for transmitting a message of setting up (MA-DMO) of the channel to the terminals registered with said base station, the message comprising the identity (ID-DMO) of the group and parameters for setting up (P-DMO) the formed channel and the determined timing advance value (TAn), the message being transmitted so that each terminal of the group registered with the base station accesses the direct mode communication channel (C-DMO) using parameters for setting up (P-DMO) in order to communicate directly with said other terminals of the group and so that the terminals synchronise with each other according to the timing advance value,
the means of the base station implementing steps of the method for setting up a direct mode communication according to any of claims 1 to 13.

15. Terminal belonging to a given direct mode communication group and registered with a base station (BSn, BS1, BS2) of a cell of a wideband radio communication system (SY), the system comprising a plurality of cells, each one comprising a base station, the terminal comprising:
- a means (IRt) for transmitting a request (RQ-DMO) for setting up a direct mode communication channel (C-DMO) to the base station, the request comprising an identity (ID-DMO) of the group and quality of service parameters (P-QoS) specific to the requested direct mode communication, the request being transmitted so that the base station sets up a direct mode communication channel (C-DMO) by allocating blocks of free resources selected from among a set of blocks of resources allocated to the current cell, according to the quality of service parameters and so that the base station determines a timing advance value (TAn) according to at least one piece of temporal data,
- a means (IRt) for receiving a message for setting up (MA-DMO) the channel coming from the base station, the message comprising the identity (ID-DMO) of the group, parameters for setting up (P-DMO) the set up channel and the timing advance value (TAn) determined by the base station, and
- a means (Md-DMO) for accessing the direct mode communication channel (C-DMO) from the transmitted parameters for setting up (P-DMO) in order to communicate directly with said other terminals of the group and for synchronising the terminal with the other terminals of the group according to the timing advance value (TAn);
the means of the terminal implementing steps of the method for setting up a direct mode communication according to any of claims 1 to 13.
